(19) Europäisches Patentamt
European Patent Office
Office européen des brevets

(11) **EP 4 209 538 A1**

(12) **EUROPEAN PATENT APPLICATION**
published in accordance with Art. 153(4) EPC

(43) Date of publication:
**12.07.2023 Bulletin 2023/28**

(21) Application number: **21864338.5**

(22) Date of filing: **31.08.2021**

(51) International Patent Classification (IPC):
**C08J 11/16** $^{(2006.01)}$

(52) Cooperative Patent Classification (CPC):
**C08J 11/16;** Y02W 30/62

(86) International application number:
**PCT/JP2021/032002**

(87) International publication number:
**WO 2022/050281 (10.03.2022 Gazette 2022/10)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **01.09.2020 JP 2020147123**

(71) Applicant: **Teijin Limited**
**Osaka 530-0005 (JP)**

(72) Inventors:
• **NYUI, Shingo**
**Osaka-shi, Osaka 530-0005 (JP)**

• **TOYOSADA, Terutaka**
**Osaka-shi, Osaka 530-0005 (JP)**
• **YAMAMOTO, Tomoyoshi**
**Osaka-shi, Osaka 530-0005 (JP)**
• **NONOKAWA, Ryuji**
**Osaka-shi, Osaka 530-0005 (JP)**
• **HUA, Guofei**
**Osaka-shi, Osaka 530-0005 (JP)**
• **MURAKAMI, Takuya**
**Osaka-shi, Osaka 530-0005 (JP)**

(74) Representative: **Carpmaels & Ransford LLP**
**One Southampton Row**
**London WC1B 5HA (GB)**

(54) **METHOD FOR DECOMPOSING PLASTIC-CONTAINING MATERIAL, METHOD FOR RECOVERING INORGANIC MATERIAL, RECYCLED CARBON FIBER, METHOD FOR PRODUCING RECYCLED CARBON FIBER, BLENDED YARN, CARBON FIBER-REINFORCED THERMOPLASTIC RESIN PELLETS CONTAINING SAID BLENDED YARN AND METHOD FOR PRODUCING SAME, CARBON FIBER-REINFORCED THERMOPLASTIC RESIN STRAND AND METHOD FOR PRODUCING SAME, AND CARBON FIBER-REINFORCED THERMOPLASTIC PELLETS**

(57) The present disclosure relates to a method for decomposing a plastic-containing material which makes it possible to stably and efficiently decompose a plastic-containing material, and a method for recovering an inorganic material, as well as a regenerated carbon fiber and a method for producing the regenerated carbon fiber. The present disclosure also relates to a blended spun yarn comprising a regenerated carbon fiber, a carbon-fiber-reinforced thermoplastic resin pellet comprising the blended spun yarn, and a method for producing them, a carbon-fiber-reinforced thermoplastic resin strand and a method for producing the same, and a carbon-fiber-reinforced thermoplastic pellet.

FIG. 2

**EP 4 209 538 A1**

**Description**

TECHNICAL FIELD

(The first invention)

The first invention of the present disclosure (first present invention) relates to a method for decomposing a plastic-containing material, a method for recovering an inorganic fiber comprising said decomposition method, a regenerated carbon fiber, and a method for producing a regenerated carbon fiber.

(The second invention)

The second invention of the present disclosure (second present invention) relates to a blended spun yarn of a regenerated carbon fiber and a thermoplastic resin fiber, and a carbon-fiber-reinforced thermoplastic resin pellet formed from said blended spun yarn. The second invention of the present disclosure also relates to methods for producing them.

(The third invention)

The third invention of the present disclosure (third present invention) relates to a carbon-fiber-reinforced thermoplastic resin strand comprising a blended spun yarn of a regenerated carbon fiber and a thermoplastic resin fiber, which is suitable for three-dimensional molding. The third invention of the present disclosure also relates to methods for producing them.

(The fourth invention)

The fourth invention of the present disclosure (fourth present invention) relates to a carbon-fiber-reinforced thermoplastic resin pellet containing a regenerated carbon fiber produced using a waste material of a carbon-fiber-reinforced resin molded articles, etc.

BACKGROUND

(Regarding the first present invention)

As a method for decomposing a plastic or as a method for recovering a reinforced fiber, etc., from a fiber-reinforced plastic, etc., a method of utilizing the thermal activation of semiconductors (i.e., TASC method) is known.

Patent Document 1 describes that a material to be decomposed, such as polycarbonate, was heated in air in the presence of a semi-conductor powder such as titanium dioxide.

Patent Document 2 discloses a method for recovering a glass fiber from a fiber-reinforced plastic. This document describes that a powder of a semiconductor such as $Cr_2O_3$ and a fiber-reinforced plastic were heated in an oven to recover a glass fiber.

Patent Document 3 describes a method for processing a plastic or a plastic composite material. The method includes contacting a semiconductor material only to the surface of a plastic or a plastic composite material to be processed, and heating the material to be processed in the presence of oxygen. This document describes a process in which the material to be processed is placed on a substrate having a semiconductor which is carried on the surface of a porous body (for example, a honeycomb-shaped support member) made of ceramics, etc.

Patent Document 4 discloses a method for decomposing a plastic composite material. The method includes contacting a catalyst of an inorganic oxide having a bandgap of less than or equal to 4 eV with a plastic composite in a reactor vessel. This document describes a heat treatment of the plastic composite in dry air using a honeycomb-type denitrification catalyst (a three-way catalyst of $TiO_2/V_2O_5/WO_3$ or $MoO_3$), etc. This document describes increasing the surface temperature of the plastic composite to 480 to 650°C.

As a method for recovering a carbon fiber from a material such as a carbon-fiber-containing plastic, a thermal decomposition method is also known, as described below (Patent Documents 5 to 7).

Patent Document 5 discloses a method for producing a regenerated carbon fiber using a carbon-fiber-reinforced plastic as a raw material. The method described in this document includes a step of subjecting the carbon-fiber-reinforced plastic to dry distillation in order to attach a fixed carbon to the surface of the carbon fiber, and a step of removing a part of the fixed carbon by heating, in order to obtain a regenerated carbon fiber.

Patent Document 6 discloses a method for obtaining a carbon fiber substrate as a regenerated carbon fiber bundle from a carbon-fiber-reinforced resin. The method includes heating the carbon-fiber-reinforced resin to thermally decompose the matrix resin so as to obtain a heat treated product, and crushing the heat treated product.

Patent Document 7 discloses a method for recovering a carbon fiber from a carbon-fiber-containing resin. The method includes subjecting a material having the carbon-fiber-containing resin to multiple stages of thermal decompositions under a specific range of oxygen concentration. In this method, the material passes through a first decompose zone B1 which is implemented at a predetermined temperature T (B1) and a predetermined oxygen content G (B1), followed by a second decompose zone B2 which is implemented at a predetermined temperature T (B2) and a predetermined oxygen content G (B2). The oxygen content G (B2) is higher than the oxygen content G (B1), and the temperature T (B2) is higher than the temperature T (B1).

(Regarding the second present invention)

Since the carbon fiber has excellent specific strength and specific elastic modulus and is lightweight, it is used as a reinforcing fiber of a thermoplastic resin, etc. Carbon-fiber-reinforced resin composites (or carbon-fiber-reinforced plastics, CFRP) are used in a wide range of applications, such as aerospace applications and automobile applications, as well as sports and general industrial applications.

One form of the carbon-fiber-reinforced resin composite material is a carbon-fiber-reinforced thermoplastic resin pellet. There are two types of the carbon-fiber-reinforced thermoplastic resin pellets: a long-fiber-reinforced pellet which is produced by cutting a resin strand obtained by coating a continuous carbon fiber with a thermoplastic resin; and a short-fiber-reinforced pellet which is produced by cutting a resin strand obtained by kneading and dispersing discontinuous carbon fibers in a thermoplastic resin. The long-fiber-reinforced pellet contains carbon fibers having longer fiber length as compared with the short-fiber-reinforced pellet. Therefore, by supplying the long-fiber-reinforced pellet to an injection molding machine, etc., it is possible to produce a carbon-fiber-containing product having excellent properties such as excellent mechanical properties.

In recent years, there has been an increasing demand for a regenerated carbon fiber (a recycled carbon fiber) recovered from used products such as used carbon-fiber-containing products. Many of the regenerated carbon fibers are discontinuously cut carbon fibers. In order to use them as a raw material for a carbon-fiber-containing product such as a carbon-fiber-reinforced resin composite material in the same way as unused continuous carbon fibers, a method for producing a spun yarn from the regenerated carbon fiber has been studied.

Patent Document 8 describes a method in which a carbide containing a regenerated carbon fiber, which is obtained by heat treating a scrap of a carbon-fiber-reinforced resin composite material at a temperature of 900°C or higher, is blended with a thermoplastic resin fiber, in order to produce a spun yarn.

Patent Document 9 describes a method of utilizing a spun yarn obtained by blending a cut unused discontinuous carbon fiber with a synthetic fiber, wherein the cut unused discontinuous fiber is used as a mock material for a regenerated carbon fiber having no carbide, and wherein a regenerated carbon fiber, which is recovered by a heat treatment of a carbon-fiber-reinforced resin composite material, is not used.

Patent Document 10 describes a method for producing a spun yarn using only carbon fibers or regenerated carbon fibers, without blending them with thermoplastic fibers.

(Regarding the third present invention)

Conventionally, there has been known a technique of performing three-dimensional molding by sequentially laminating a resin for each cross section of a model object cut on a plurality of parallel planes, in order to generate a molded object as a three-dimensional model of the model object. Such a technique is called three-dimensional molding, and can be used, for example, for parts prototyping and product manufacturing. As methods of the three-dimensional molding, for example, following methods are known: a photo-molding method using a photocurable resin, a powder lamination method using a metal or a resin powder, a fused deposition method in which a resin is melted and deposited, a thin-plate lamination method in which a paper, a resin sheet, or a metal thin plate is laminated, and an ink jet method in which a resin or a metal in a liquid state or a powder state is ejected.

As an example of the fused deposition method, Patent Document 11 discloses a fused deposition method using a thermoplastic polymer material. In this technique, a solid thermoplastic polymer material is supplied to a discharging head, and in the discharging head, the polymer material is melted, and the melted polymer material is discharged from the discharging head and deposited in layers, and these procedures are repeated. Examples of the thermoplastic polymer that can be used in this technique include polyethersulfone, polyetherimide, polyphenylsulfone, polyphenylene, polycarbonate, high impact polystyrene, polysulfone, polystyrene, acrylic resins, amorphous polyamide, polyester, nylon, PEEK, and ABS. In particular, the method makes it possible to perform melting and discharging at a relatively low temperature. Further, polylactic acid, which is a thermoplastic polyester derived from a plant, is preferably used since it is excellent in terms of low environmental load.

In addition, a fiber-reinforced resin composition (a FRP molded article) containing fibers in a resin are used in a wide range of fields, for example, from aerospace applications to sports applications, because they are lightweight and have excellent mechanical properties. Further, in the fused deposition method described above, a technique is also known in which a fiber resin material, which is formed by integrating a melted thermoplastic resin and a fiber, is laminated on a mold, and the fiber resin material is further laminated on the laminated fiber resin material (Patent Document 12).

Further, as described above, in recent years, there has been an increasing demand for a regenerated carbon fiber recovered from used products such as used carbon-fiber-containing products. Many of the regenerated carbon fibers are discontinuously cut carbon fibers. In order to use them as a raw material for the production of a carbon-fiber-containing product such as a carbon-fiber-reinforced resin composite material in the same way as unused continuous carbon fibers, a method for producing a spun yarn from the regenerated carbon fiber has been studied (see Patent Documents 8 to 10 explained above).

(Regarding the fourth present invention)

As described above, the carbon fiber is excellent in specific strength and specific elastic modulus, and is lightweight, and thus used for example as a reinforcing fiber of a thermoplastic resin. Carbon-fiber-reinforced resin composites (or carbon-fiber-reinforced plastics, CFRP) are used in a wide range of applications, such as aerospace applications and automobile applications, as well as sports and general industrial applications.

As described above, one form of the carbon-fiber-reinforced resin composite material is a carbon-fiber-reinforced thermoplastic resin pellet. There are two types of the carbon-fiber-reinforced thermoplastic resin pellets: a long-fiber-reinforced pellet which is produced by cutting a resin strand obtained by coating a continuous carbon fiber with a thermoplastic resin; and a short-fiber-reinforced pellet which is produced by cutting a resin strand obtained by kneading and dispersing discontinuous carbon fibers in a thermoplastic resin. In contrast to the long-fiber-reinforced thermoplastic resin pellet, the short-fiber-reinforced thermoplastic resin pellet is widely used for low cost production, even though mechanical properties are relatively low.

Patent Document 13 and Patent Document 14 describe a method for producing a regenerated-carbon-fiber-containing composite from a carbon fiber by melt-kneading. The carbon fiber used in this method is recovered from waste materials of a carbon-fiber-reinforced resin composite material by a thermal decomposition method, wherein a residual carbon derived from a carbonized matrix component is adhered on the carbon fiber.

Patent Document 15 describes a carbon fiber aggregate having improved feedability, which is manufactured by adding a fiber treatment agent to a regenerated carbon fiber recovered from a carbon-fiber-reinforced composite material, and by shaping it into a cylindrical shape in an extrusion granulator.

[Citation List]

[Patent Literature]

[Patent Document 1] JP 2005-139440A
[Patent Document 2] JP 2012-211223A
[Patent Document 3] JP 2013-146649A
[Patent Document 4] JP 2020-28850A
[Patent Document 5] JP 2013-64219A
[Patent Document 6] WO 2018/212016
[Patent Document 7] JP 2018-109184A
[Patent Document 8] JP 2018-35492A
[Patent Document 9] JP 2018-123438A
[Patent Document 10] JP 2020-90738A
[Patent Document 11] JP 2005-531439A
[Patent Document 12] JP 2016-520459A
[Patent Document 13] JP 2020-49820A
[Patent Document 14] JP 2019-155634A
[Patent Document 15] JP 2021-55198A

SUMMARY OF INVENTION

[Problem to be solved by the invention]

(The first present invention)

In the conventional plastic decomposition method, since the heat treatment is performed at a relatively high temperature, the energy consumption is sometimes excessively increased.

Further, in the conventional plastic decomposition method utilizing the thermal activation of a semiconductor, oxidation-induced excessive heat generation may occur when a heat treatment is performed in the atmosphere. The oxidation-induced excessive heat generation makes it difficult to precisely control the temperature, which may be inappropriate in terms of the stability of the process, etc., in particular on an industrial scale.

In addition, when the oxygen concentration is controlled to a relatively low level, in the conventional thermal decomposition method without a semiconductor, the decomposition efficiency of a plastic may become insufficient, or physical properties of a carbon fiber to be recovered may become inferior.

In such a background, an object of the first invention of the present disclosure is to provide a method for decomposing a plastic-containing material which makes it possible to stably and efficiently decompose the plastic-containing material, and to provide a method for recovering an inorganic material.

(The second present invention)

As a method for decomposing a used carbon-fiber-reinforced resin composite material to obtain a regenerated carbon fiber, mention may be made of a method of decomposing a resin component by heat treatment (a method of thermal decomposition), a method of dissolving and removing a resin component by using a solvent, and a method of utilizing electrolysis. Among those methods, the method of thermal decomposition has been widely used conventionally.

However, when a regenerated carbon fiber obtained from the method of thermal decomposition is used as a raw material, there is a case in which a blended spun yarn with a thermoplastic resin fiber may not be obtained.

An object of the second invention of the present disclosure is to provide a blended spun yarn with a thermoplastic resin fiber, which is stably produced using, as a raw material, a regenerated carbon fiber obtained by the method of thermal decomposition. Another object of the second invention of the present disclosure is to provide a carbon-fiber-reinforced thermoplastic resin fiber pellet formed from the blended spun yarn.

(The third present invention)

As a method for decomposing a used carbon-fiber-reinforced resin composite material to obtain a regenerated carbon fiber, mention may be made of a method of decomposing a resin component by heat treatment (a method of thermal decomposition), a method of dissolving and removing a resin component by using a solvent, and a method of utilizing electrolysis. Among those methods, the method of thermal decomposition has been widely used conventionally.

However, when a blended spun yarn with a thermoplastic resin fiber was produced using, as a raw material, a regenerated carbon fiber obtained by the method of thermal decomposition, there were problems that a resin in the carbon-fiber-reinforced resin composite material was not completely decomposed, that the production of the blended spun yarn became difficult due to the generation of residual carbides, and that the mechanical properties of the fiber obtained after the decomposition treatment, in particular the strength of the fiber, was reduced as compared with the fiber before the decomposition treatment, and as a result the strength of the molded article of the fiber-reinforced composite material which is produced using this fiber was also reduced.

An object of the third invention of the present disclosure is to provide a carbon-fiber-reinforced thermoplastic resin strand which can be stably produced using, as raw materials, a regenerated carbon fiber obtained by the method of thermal decomposition and a thermoplastic resin, wherein the strand is in particular suitable for the production of a three-dimensional molded article having excellent mechanical properties.

(The fourth present invention)

As a method for decomposing a used carbon-fiber-reinforced resin composite material to obtain a regenerated carbon fiber, mention may be made of a method of decomposing a resin component by heat treatment (a method of thermal decomposition), a method of dissolving and removing a resin component by using a solvent, and a method of utilizing electrolysis. Among those methods, the method of thermal decomposition has been widely used conventionally.

When a conventional regenerated carbon fiber obtained by the method of thermal decomposition is used to produce a short-fiber-reinforced thermoplastic resin pellets, it was difficult to achieve sufficient reinforcing performance.

An object of the fourth invention of the present disclosure is to provide a regenerated-carbon-fiber-reinforced thermoplastic resin pellet, which is produced using, as a raw material, a regenerated carbon fiber obtained by the method of thermal decomposition, and which can be used to produce a molded article having excellent mechanical strength.

[Means for solving the problem]

(The first present invention)

The inventors of the present invention have found that the above-described problems according to the first present invention are solved by "Embodiment A1" to "Embodiment A15" of the first invention of the present disclosure below.

Embodiment A1

A method for decomposing a plastic-containing material, comprising:
heating the plastic-containing material to a first surface temperature in the presence of a semiconductor material in an atmosphere of a furnace into which a low oxygen concentration gas having an oxygen concentration of less than 10% by volume is introduced, in order to decompose a plastic contained in the plastic-containing material.

Embodiment A2

The decomposing method according to Embodiment A1, wherein the low oxygen concentration gas is introduced into the atmosphere of the furnace while the surface temperature of the plastic-containing material is less than 300°C.

Embodiment A3

The decomposing method according to Embodiment A1 or A2, wherein the first surface temperature is 300°C to 600°C.

Embodiment A4

The decomposing method according to any one of Embodiments A1 to A3, wherein the low oxygen concentration gas is a mixed gas of air and a dilution gas.

Embodiment A5

The decomposing method according to Embodiment A4, wherein the dilution gas comprises superheated steam.

Embodiment A6

The decomposing method according to any one of Embodiments A1 to A5, wherein the plastic-containing material and the semiconductor material are arranged so that they are spaced apart from each other by a distance of 50 mm or less.

Embodiment A7

The decomposing method according to any one of Embodiments A1 to A5, wherein the plastic-containing material and the semiconductor material are arranged in contact with each other.

Embodiment A8

The decomposing method according to any one of Embodiments A1 to A7, further comprising heating the plastic-containing material, which has been subjected to the heat treatment at the first surface temperature, in the presence of a semiconductor material in an atmosphere having an oxygen concentration of 10% by volume or more.

Embodiment A9

The decomposing method according to any one of Embodiments A1 to A8, wherein the semiconductor material is an oxide semiconductor material.

Embodiment A10

A method for recovering an inorganic material, wherein the plastic contained in the plastic-containing material is decomposed by the decomposing method according to any one of Embodiments A1 to A9, in order to recover the inorganic material, wherein the plastic-containing material comprises the plastic and the inorganic material.

Embodiment A11

The method according to embodiment A10, wherein a residual carbon derived from the plastic, which is recovered together with the inorganic material, is 5% by weight or less of the inorganic material.

Embodiment A12

The method according to Embodiment A10 or A11, wherein the plastic-containing material is a carbon-fiber-reinforced plastic which contains a carbon fiber as the inorganic material.

Embodiment A13

The method according to Embodiment A12, wherein the recovered carbon fiber has the single fiber tensile strength of 3.0 GPa or higher, and the Weibull shape parameter of 6.0 or higher.

Embodiment A14

A regenerated carbon fiber having the single fiber tensile strength of 3.0 GPa or higher and the Weibull shape parameter of 6.0 or higher.

Embodiment A15

A method for producing a regenerated carbon fiber having the single fiber tensile strength of 3.0 GPa or higher and the Weibull shape parameter of 6.0 or higher, comprising:

heating a plastic-containing material to a first surface temperature in the presence of a semiconductor material in an atmosphere of a furnace into which a low oxygen concentration gas having an oxygen concentration of less than 10% by volume is introduced, in order to decompose a plastic contained in the plastic-containing material, wherein the plastic-containing material is a carbon-fiber-reinforced plastic which contains a carbon fiber.

(The second present invention)

The above-described problems according to the second present invention are solved by "Embodiment B1" to "Embodiment B10" of the second invention of the present disclosure below.

Embodiment B1

A blended spun yarn comprising a regenerated carbon fiber and a thermoplastic resin fiber, characterized in that:

the regenerated carbon fiber has the single fiber tensile strength of 3.0 GPa or higher and the Weibull shape parameter of 6.0 or higher; and
the regenerated carbon fiber contains a residual carbon component, and the content of the residual carbon component is more than 0% by weight and 5.0% by weight or less with respect to the regenerated carbon fiber.

Embodiment B2

The blended spun yarn according to Embodiment B1, wherein the content of the regenerated carbon fiber is more than 50% by weight and 98% by weight or less with respect to the blended spun yarn.

Embodiment B3

The blended spun yarn according to Embodiment B 1 or B2, wherein the average length of each of the regenerated carbon fiber and the thermoplastic resin fiber is 20 mm or more and 80 mm or less.

Embodiment B4

The blended spun yarn according to any one of Embodiments B1 to B3, wherein the thermoplastic resin fiber contained in the blended spun yarn is selected from a polyolefin resin fiber, a polyester resin fiber, a polyamide resin fiber, a polyether ketone resin fiber, a polycarbonate resin fiber, a phenoxy resin fiber, and a polyphenylenesulfide resin fiber, and mixtures thereof.

Embodiment B5

A carbon-fiber-reinforced thermoplastic resin pellet, characterized in that

it has a core-sheath structure having a core component and a sheath component,
the core component is the blended spun yarn according to any one of Embodiments B1 to B4, and
the sheath component is a thermoplastic resin.

Embodiment B6

The carbon-fiber-reinforced thermoplastic resin pellet according to Embodiment B5, wherein the thermoplastic resin as the sheath component is selected from polyolefin resins, polyester resins, polyamide resins, polyether ketone resins, polycarbonate resins, phenoxy resins, and polyphenylenesulfide resins, and mixtures thereof.

Embodiment B7

The carbon-fiber-reinforced thermoplastic resin pellet according to Embodiment B5 or B6, characterized in that

the melt point T0 (°C) of the thermoplastic resin as the sheath component is lower than the melting point T1 (°C) of the thermoplastic resin fiber contained in the blended spun yarn, and

the melting points T1 and T0 satisfy T1-TO> 10.

Embodiment B8

The carbon-fiber-reinforced thermoplastic resin pellet according to any one of Embodiments B5 to B7, wherein the cut length is 3 mm or more and 10 mm or less.

Embodiment B9

A method for producing a blended spun yarn, comprising:

producing a regenerated carbon fiber by decomposing a plastic component contained in a carbon-fiber-containing plastic product by a thermal activation of semiconductors method; and
blending the regenerated carbon fiber and a thermoplastic resin fiber in order to form the blended spun yarn.

Embodiment B10

A method for producing a carbon-fiber-reinforced thermoplastic resin pellet having a core-sheath structure, comprising
coating the blended spun yarn obtained by the method according to embodiment B9 with a thermoplastic resin.

(The third present invention)

The above-described problems according to the third present invention are solved by "Embodiment C1" to "Embodiment C8" of the third invention of the present disclosure below.

Embodiment C1

A carbon-fiber-reinforced thermoplastic resin strand which comprises a blended spun yarn comprising a regenerated carbon fiber and a thermoplastic resin fiber, characterized in that:

the regenerated carbon fiber has the single fiber tensile strength of 3.0 GPa or higher and the Weibull shape parameter of 6.0 or higher; and
the regenerated carbon fiber contains a residual carbon component, and the content of the residual carbon component is more than 0% by weight and 5.0% by weight or less with respect to the regenerated carbon fiber.

Embodiment C2

The carbon-fiber-reinforced thermoplastic resin strand according to Embodiment C1, wherein the content of the regenerated carbon fiber is more than 50% by weight and 98% by weight or less with respect to the blended spun yarn.

Embodiment C3

The carbon-fiber-reinforced thermoplastic resin strand according to Embodiment C1 or C2, wherein the average length of each of the regenerated carbon fiber and the thermoplastic resin fiber is 20 mm or more and 80 mm or less.

Embodiment C4

The carbon-fiber-reinforced thermoplastic resin strand according to any one of Embodiments C1 to C3, wherein the thermoplastic resin fiber is selected from a polyolefin resin fiber, a polyester resin fiber, a polyamide resin fiber, a polyether ketone resin fiber, a polycarbonate resin fiber, a phenoxy resin fiber, and a polyphenylenesulfide resin fiber, and mixtures thereof.

Embodiment C5

The carbon-fiber-reinforced thermoplastic resin strand according to any one of Embodiments C1 to C4, characterized in that

it has a core-sheath structure with a core component and a sheath component,
the core component is the blended spun yarn, and
the sheath component is a thermoplastic resin.

Embodiment C6

The carbon-fiber-reinforced thermoplastic resin strand according to Embodiment C5, characterized in that

the melt point T0 (°C) of the thermoplastic resin as the sheath component is lower than the melting point T1 (°C) of the thermoplastic resin fiber contained in the blended spun yarn, and

the melting points T1 and To satisfy T1-T0>10.

Embodiment C7

A method for producing the carbon-fiber-reinforced thermoplastic resin strand according to any one of Embodiments C1 to C6, comprising

producing a regenerated carbon fiber by decomposing a plastic component contained in a carbon-fiber-containing plastic product by a thermal activation of semiconductors method, and
blending the regenerated carbon fiber and a thermoplastic resin fiber in order to form a blended spun yarn.

Embodiment C8

A method for producing a three-dimensional molded article, wherein the carbon-fiber-reinforced thermoplastic strand according to any one of Embodiments C1 to C6 is used to form the three-dimensional molded article by a fused deposition method.

(The fourth present invention)

The above-described problems according to the fourth present invention of the present disclosure are solved by "Embodiment D1" to "Embodiment D7" of the fourth invention of the present disclosure below.

Embodiment D1

A carbon-fiber-reinforced thermoplastic resin pellet which comprises a regenerated carbon fiber and a thermoplastic resin, characterized in that:

the regenerated carbon fiber has the single fiber tensile strength of 3.0 GPa or higher and the Weibull shape parameter of 6.0 or higher; and
the regenerated carbon fiber contains a residual carbon component, and the content of the residual carbon component is more than 0% by weight and 5.0% by weight or less with respect to the regenerated carbon fiber.

Embodiment D2

The carbon-fiber-reinforced thermoplastic resin pellet according to Embodiment D1, wherein the content of the regenerated carbon fiber is 5% by weight or more and less than 50% by weight with respect to the carbon-fiber-reinforced thermoplastic resin pellet.

Embodiment D3

The carbon-fiber-reinforced thermoplastic resin pellet according to Embodiment D1 or D2, wherein the thermoplastic resin is selected from polyolefin resins, polyester resins, polyamide resins, polyether ketone resins, polycarbonate resins, phenoxy resins, and polyphenylenesulfide resins, and mixtures thereof.

Embodiment D4

The carbon-fiber-reinforced thermoplastic resin pellet according to any one of Embodiments D1 to D3, wherein the length along the longitudinal direction is 3 mm or more and 10 mm or less.

Embodiment D5

The carbon-fiber-reinforced thermoplastic resin pellet according to any one of Embodiments D1 to D4, characterized in that the residual average fiber length of the regenerated carbon fiber contained in the carbon-fiber-reinforced thermoplastic resin pellet is 300 $\mu$m or more.

Embodiment D6

The carbon-fiber-reinforced thermoplastic resin pellet according to any one of Embodiments D1 to D5, which is used for producing a molded article having the tensile strength of 90 MPa or higher, the flexural strength of 140 MPa or higher, and the flexural modulus of 7100 MPa or higher.

Embodiment D7

The carbon-fiber-reinforced thermoplastic resin pellet according to any one of Embodiments D1 to D6, characterized in that, for the regenerated carbon fiber in the carbon-fiber-reinforced thermoplastic resin pellet, the occurrence frequency of single fibers of 300 $\mu$m or less is 40% or less.

[Effect of the invention]

(The first present invention)

According to the first invention of the present disclosure, it is possible to provide a method for decomposing a plastic-containing material, which is capable of stably and efficiently decomposing the plastic-containing material.

Further, according to the first invention of the present disclosure, it is possible to efficiently recover an inorganic material from a plastic composite material containing a plastic and an inorganic material.

(The second present invention)

According to the second invention of the present disclosure, it is possible to provide a blended spun yarn with a thermoplastic resin fiber, which is stably produced by using, as a raw material, a regenerated carbon fiber obtained by a method of thermal decomposition. Further, according to the second invention of the present disclosure, it is possible to provide a carbon-fiber-reinforced thermoplastic resin pellet formed from said blended spun yarn.

(The third present invention)

According to the third invention of the present disclosure, it is possible to provide a carbon-fiber-reinforced thermoplastic resin strand which can be stably produced by using, as raw materials, a regenerated carbon fiber obtained by a method of thermal decomposition and a thermoplastic resin fiber, wherein the strand is in particular suitable for producing a three-dimensional molded article having excellent mechanical properties.

(The fourth present invention)

According to the fourth invention of the present disclosure, it is possible to provide a regenerated-carbon-fiber-reinforced thermoplastic resin pellet by using, as a raw material, a regenerated carbon fiber obtained by a method of thermal decomposition, wherein the pellet can be used for the production of a molded article having excellent mechanical properties.

In particular, according to the carbon-fiber-reinforced thermoplastic resin pellet of the fourth invention of the present disclosure, it is possible to manufacture a molded article having a mechanical strength comparable to that of a molded article manufactured from a carbon-fiber-reinforced thermoplastic resin pellet produced from a virgin carbon fiber (i.e., a normal carbon fiber which is not a regenerated carbon fiber) as a raw material.

[Brief Description of the Drawings]

[Fig. 1] FIG. 1 is a conceptual cross-sectional view which is for explaining the decomposing method according to a first invention of the present disclosure.

[Fig. 2] FIG. 2 is a schematic cross-sectional view schematically showing one embodiment of the decomposing method according to the first invention of the present disclosure.

[Fig. 3] FIG. 3 is a photograph of a CFRP plate prior to a heat treatment.

[Fig. 4] FIG. 4 is a photograph of a CFRP plate after subjected to the treatment according to Example 1-4.

[Fig. 5] FIG. 5 is a photograph of a CFRP plate after subjected to the treatment according to Comparative Example 1-2.

**[Fig.** 6] FIG. 6 is schematic diagrams of the carbon-fiber-reinforced thermoplastic resin pellet according to the second invention of the present disclosure, and the carbon-fiber-reinforced thermoplastic resin strand used during the production of the pellet according to the second invention of the present disclosure.

[Fig. 7] FIG. 7 is a schematic diagram of the carbon-fiber-reinforced thermoplastic resin strand according to the third invention of the present disclosure.

[Specific embodiments for implementing the present invention]

(The first present invention)

Method for decomposing plastic-containing material

The method for decomposing a plastic-containing material according to the first invention of the present disclosure comprises:
heating the plastic-containing material to a first surface temperature in the presence of a semiconductor material in an atmosphere of a furnace into which a low oxygen concentration gas having an oxygen concentration of less than 10% by volume is introduced, in order to decompose a plastic contained in the plastic-containing material.

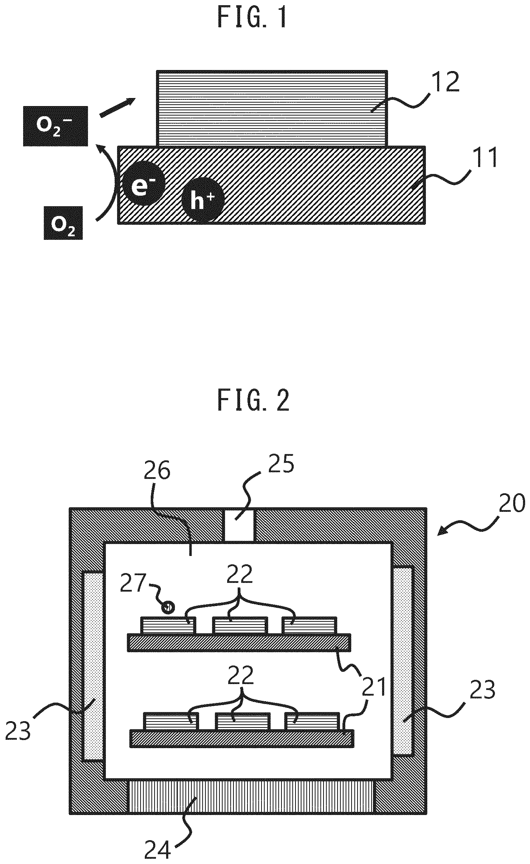

FIG. 1 is a conceptual cross-sectional view for explaining the decomposing method according to the first present invention. A mechanism of the decomposition of the plastic-containing material according to the first present invention will be described below. It should be noted that the present invention is not intended to be bound by theory.

It is considered that when a semiconductor material 11 is heated in an oxygen atmosphere, holes $h^+$ and electrons $e^-$ are generated in the semiconductor material 11, and the electrons $e^-$ react with oxygen $O_2$ in the atmosphere, in order to generate $O_2^-$ radicals (active oxygen). Then, in a plastic-containing material 12 disposed adjacently to the semiconductor material 11, the radical propagation occurs, and the plastic-containing material 12 is decomposed into low-molecular-weight components, and further, oxidized and decomposed into decomposed gases such as $CO_2$, $H_2O$, $CH_4$. It is considered that the radicals promote the oxidative decomposition of the plastic by pulling hydrogen out from the plastic.

By using a semiconductor material, the heat which is introduced for the decomposition of the plastic can be reduced as compared with the case in which a semiconductor material is not used, and as a result, the energy consumption can be reduced.

In the conventional plastic decomposition method based on a thermal activation of semiconductors, oxidation-induced excessive heat may be generated during the heat treatment. In the conventional method, it is considered that since the heat treatment is performed in an atmosphere in which the oxygen concentration is not controlled, radicals are generated excessively, resulting in the generation of oxidation-induced excessive heat.

On the other hand, the present inventors have found that even in the presence of a semiconductor material, by using a relatively low oxygen concentration, it is possible to subject a plastic to an efficient heat treatment, while suppressing the generation of oxidation-induced excessive heat.

In particular, in the initial stage of the thermal decomposition of a plastic, oxidation-induced excessive heat tends to be generated due to a relatively large amount of plastic. On the other hand, according to the method of the first invention of the present disclosure, since the heat treatment is efficiently performed at a relatively low oxygen concentration, it is possible to suppress the generation of the oxidation-induced excessive heat even in the initial stage of the decomposition.

Therefore, according to the method of the first invention of the present disclosure, since the heat treatment is performed in the presence of a semiconductor material, it is possible to obtain a good decomposition efficiency even at a relatively low oxygen concentration, and further, by making the concentration of oxygen in the furnace relatively low, it is possible to suppress the oxidation-induced excessive heat, and thus it is possible to achieve a decomposition treatment having improved stability.

The decomposing method according to the first invention of the present disclosure will be described with reference to a drawing which depicts an exemplary embodiment.

FIG. 2 is a cross-sectional view schematically showing one embodiment of the decomposing method according to the first invention of the present disclosure. The furnace 20 shown in FIG. 2 includes a heat source (heater) 23, a gas supply part 24, an exhaust port 25, and an internal space 26. A porous carrier 21 is arranged in the internal space 26 of the furnace 20, and a semiconductor material is carried on the surface of the carrier 21. In the embodiment of FIG. 2, a plastic-containing material 22 is arranged in contact with the carrier 21.

The temperature of the atmosphere in the interior space 26 of the furnace 20 may be controlled via the heat source (heater) 23 of the furnace 20 so that the surface temperature of the plastic-containing material 22 is at a certain temperature. The surface temperature of the plastic-containing material 22 can be measured via a temperature sensor 27 located within 5 mm from the surface of the plastic-containing material 22.

A low oxygen concentration gas having an oxygen concentration of less than 10% by volume is introduced into the internal space 26 of the furnace 20 through the gas supply part 24. The oxygen concentration of the atmosphere in the furnace 20 can be controlled by selecting the introduction rate of the low oxygen concentration gas, depending on the internal volume of the furnace. For example, the low oxygen concentration gas can be pushed into the furnace through the gas supply part provided in the furnace, or can be sucked into the furnace by applying a suction pressure to the exhaust port 25.

The low oxygen concentration gas is, for example, a mixed gas of air and nitrogen gas. The oxygen concentration in the furnace can be controlled by selecting the ratio of air and nitrogen gas.

In an atmosphere in which the oxygen concentration is controlled to less than 10% by volume by introducing the low oxygen concentration gas, the plastic-containing material is heated to a first surface temperature, for example, to a first surface temperature of 300°C to 600°C. As a result, a plastic contained in the plastic-containing material 22 is decomposed into decomposed gases such as water vapor, carbon dioxide, and methane, and the decomposed gases are discharged from the exhaust port 25 of the furnace 20.

After said heat treatment at an oxygen concentration of less than 10% by volume, a heat treatment can be further performed wherein the oxygen concentration is increased to 10% by volume or more.

Further, after the heat treatment, an inorganic material contained in the plastic-containing material can be recovered.

Hereinafter, a decomposing method according to the first invention of the present disclosure will be described in more detail.

Plastic-containing material

The plastic-containing material contains a plastic. The plastic-containing material may be a plastic material or a plastic composite material.

Examples of the plastic contained in the plastic-containing material include a thermoplastic resin and a thermosetting resin.

Examples of the thermoplastic resin contained in the plastic-containing material include polycarbonate (PC) resins, polyethylene (PE) resins, polypropylene (PP) resins, polyvinyl chloride (PVC) resins, polystyrene (PS) resins, polyethylene terephthalate (PET) resins, acrylonitrile-butadiene-styrene (ABS) resins, polyamide (PA) resins, polylactic acid resin (PLA), polyimide (PI) resins, polymethyl methacrylate (PMMA) resins, methacrylic resins, polyvinyl alcohol (PVA) resins, polyacetal resins, petroleum resins, AS resins, modified polyphenylene ether resins, polybutylene terephthalate (PBT) resins, polybutene (PB) resins, fluororesins, polyacrylate resins, polyether ether ketone (PEEK) resins, and polyphenylenesulfide (PPS) resins.

Examples of the thermosetting resin contained in the plastic-containing material include phenol resins, urethane foam resins, polyurethane resins, urea resins, epoxy resins, unsaturated polyester resins, melamine resins, alkyd resins, vinyl ester resins, and cyanate resins.

The plastic-containing material may contain at least one selected from the group consisting of the thermoplastic resins and the thermosetting resins describe above.

Plastic composite material

The plastic-containing material is in particular a plastic composite material. The plastic composite material is, for example, a fiber-reinforced plastic (FRP). A reinforcing fiber contained in the fiber-reinforced plastic includes a glass fiber, an aramid fiber, and a carbon fiber.

Carbon-fiber-reinforced plastic

The plastic composite material is in particular a carbon-fiber-containing plastic products such as a carbon-fiber-reinforced plastic (CFRP). The carbon-fiber-reinforced plastic contains a plastic and a carbon fiber (a carbon fiber material). The carbon-fiber-reinforced plastic may comprise other component(s) and/or material(s) (e.g., a reinforcing fiber other than the carbon fiber, a resin molded article, a metal, a ceramic, etc.).

Examples of the carbon fiber include, but are not limited to, a PAN-type carbon fiber and a pitch-type carbon fiber. The carbon fiber may be one type or may be composed of two or more types.

The carbon fiber contained in the carbon-fiber-reinforced plastic may be in any form, and may be, for example, a carbon fiber bundle, a woven fabric formed from a carbon fiber bundle, or a non-woven fabric of a carbon fiber.

Introduction of low oxygen concentration gas

In the method according to the first invention of the present disclosure, a low oxygen concentration gas having an oxygen concentration of less than 10% by volume is introduced into the atmosphere of the furnace.

Preferably, the oxygen concentration of the low oxygen concentration gas introduced in the atmosphere of the furnace is more than 0% by volume, 1% by volume or more, 2% by volume or more, 3% by volume or more, or 4% by volume or more, and/or 9% by volume or less, 8% by volume or less, or 7% by volume or less.

The timing at which the low oxygen concentration gas is introduced into the furnace can be determined depending on, for example, the type of plastic contained in the plastic-containing material, and the surface temperature at which the decomposition of the plastic begins. Further, the timing at which the low oxygen concentration gas is introduced into the furnace can be determined based on data acquired in advance with regard to the self-heating of the plastic-containing material.

In a preferred embodiment according to the first invention of the present disclosure, the low oxygen concentration gas is introduced into the atmosphere of the furnace while the surface temperature of the plastic-containing material contained in the furnace is less than 300°C.

More preferably, the low oxygen concentration gas having an oxygen concentration of less than 10% by volume is introduced into the atmosphere of the furnace while the surface temperature of the plastic-containing material contained in the furnace is 250°C or less, 200°C or less, or 150°C or less. Incidentally, when the low oxygen concentration gas of less than 10 volume% oxygen concentration is introduced into the atmosphere of the furnace, the lower limit of the surface temperature of the plastic-containing material contained in the furnace is not limited, but may be, for example, 0°C or more, 10°C or more, 20°C or more, or greater or equal to room temperature.

More preferably, the low oxygen concentration gas having an oxygen concentration of less than 10% by volume is introduced into the atmosphere of the furnace, in particular into the atmosphere of the furnace which contains a plastic-containing material having a surface temperature of less than 300°C, in order to achieve less than 10% by volume of oxygen concentration in the atmosphere of the furnace.

More preferably, the low oxygen concentration gas having an oxygen concentration of less than 10% by volume is introduced into the atmosphere of the furnace, in particular into the atmosphere of the furnace which contains a plastic-containing material having a surface temperature of less than 300°C, in order to control the oxygen concentration in the atmosphere of the furnace to more than 0% by volume, 1% by volume or more, 2% by volume or more, 3% by volume or more, or 4% by volume or more, and/or 9% by volume or less, 8% by volume or less, or 7% by volume or less.

The oxygen concentration in the furnace can be measured directly by an oximeter (oxygen monitor) or can be determined based on the internal volume of the furnace and the amount of gas introduced into the furnace. The oxygen concentration in the furnace is preferably the average oxygen concentration over the course of the heat treatment.

The introduction of the low oxygen concentration gas into the furnace can be carried out, for example, by pushing the low oxygen concentration gas into the furnace via a gas supply part provided in the furnace, or by performing a suction from a suction port (or an exhaust port) provided in the furnace so that the gas flows into the furnace from a gas supply part provided at a location different from the suction port. The gas supply part of the furnace may have, for example, an opening and/or a gas-permeable material.

The amount of the gas introduced into the furnace can be selected based on the unit resin amount of a resin to be decomposed (for example, an epoxy resin), and depending on the capacity and the desired oxygen concentration of the furnace.

For example, the gas introduction rate to the furnace per unit resin amount may be determined in a range of 1 to 1000 (L/min)/kg, preferably in a range of 2 to 700 (L/min)/kg. In addition, the time period for replacing the atmosphere of the furnace by the introduced gas can be determined, based on the determined gas introduction rate and the volume of the furnace used.

In particular, the introduction rate of the low oxygen concentration gas can be selected relative to the furnace volume, so that the atmosphere in the furnace is replaced by the introduced low oxygen concentration gas while the surface temperature of the plastic-containing material contained in the furnace is less than 300°C.

The low oxygen concentration gas introduced into the furnace may comprise a dilution gas, and is in particular a mixed gas of air and the dilution gas. Examples of the dilution gas include nitrogen gas, carbon dioxide gas, water vapor, and superheated steam. Incidentally, the superheated steam is a steam heated to a temperature equal to or higher than the boiling point. The superheated steam has an advantage that it has relatively high heat transfer properties to a material to be decomposed.

Furnace

The furnace may be a combustion furnace or an electric furnace. The furnace may have, for example, an internal space for accommodating the plastic-containing material and the semiconductor material, a heat source (heater) for heating the atmosphere in the furnace, a gas supply part for introducing the low oxygen concentration gas into the furnace, an exhaust port for discharging the decomposed gas, and optionally a suction port for applying suction pressure to the inside of the furnace. Note that it is also possible to use a single structure for both of the exhaust port and suction port. For example, one or more openings provided in the furnace can be used as the exhaust port and/or the suction port.

Surface temperature

The "surface temperature" of the plastic-containing material can be determined by measuring the temperature within 5 mm from plastic-containing material during the heat treatment.

The surface temperature of the plastic-containing material can be controlled, for example, by controlling the temperature in the furnace via a heat source of the furnace and/or by introducing a low temperature gas into the furnace, and/or by reducing the oxygen concentration to suppress the oxidation-induced heat generation.

Further, it is also possible to control the surface temperature with higher accuracy, by measuring the surface temperature of the plastic-containing material with a temperature sensor placed within 5 mm from the surface of the plastic-containing material and then by controlling the heat source of the furnace based on the measured value in a feed-back manner.

Further, for example, data may be acquired in advance with regard to the correlation between the temperature in the furnace and/or the output of the heat source and the surface temperature measured by the sensor, and the heat treatment may be performed based on this data.

Heat treatment

A method according to a first invention of the present disclosure comprising: heating a plastic-containing material to a first surface temperature in the presence of a semiconductor material in an atmosphere of a furnace into which a low oxygen concentration gas having an oxygen concentration of less than 10% by volume is introduced, in order to decompose a plastic contained in the plastic-containing material.

Preferably, the heat treatment is carried out in an atmosphere where the oxygen concentration has been controlled to less than 10% by volume by an introduction of a low oxygen concentration gas having less than 10% by volume of oxygen concentration; in particular, the heat treatment is carried out in an atmosphere having more than 0% by volume, 1% by volume or more, 2% by volume or more, 3% by volume or more, or 4% by volume or more of oxygen concentration, and/or having 9% by volume or less, 8% by volume or less, or 7% by volume or less of oxygen concentration.

First surface temperature

The "first surface temperature" is a surface temperature of the plastic-containing material. The "first surface temperature" can be determined by measuring the temperature within 5 mm from the plastic-containing material during the heat treatment, in a similar manner as in the "surface temperature" described above.

The first surface temperature may be 300°C or more, 325°C or more, or 350°C or more, and/or 600°C or less, 550°C or less, 500°C or less, or 450°C or less. The first surface temperature is, for example, 300°C to 600°C, 300°C to 550°C, 300°C to 500°C, or 300°C to 450°C.

When the first surface temperature is less than the above range, decomposition of the plastic may not occur. Further, when the first surface temperature exceeds the above range, in the case where the plastic-containing material comprises a valuable material such as a carbon fiber, the deterioration and/or burnout of the valuable material such as a carbon fiber due to the heating in the presence of oxygen may become prominent. By setting the first surface temperature to a relatively low temperature, the effect of suppressing the oxidation-induced excessive heat is further enhanced.

In a preferred embodiment of the first invention of the present disclosure, the first surface temperature is increased to a temperature of 450°C or higher during the heat treatment at an oxygen concentration of less than 10% by volume. If the heating temperature is relatively low, further decomposition of the plastic may be hindered by carbides formed on the surface of the plastic-containing material. However, by increasing the surface temperature to 450 °C or higher, it is possible to remove the carbides even at a relatively low oxygen concentration. Therefore, it is possible to further improve the decomposition efficiency of the plastic.

Preferably, the heat treatment under the introduction of the low oxygen concentration gas having an oxygen concentration of less than 10% by volume is performed for a predetermined period of time. This predetermined time may be from 1 minute to 600 minutes, preferably from 30 minutes to 300 minutes, more preferably from 60 minutes to 180 minutes. Incidentally, the starting point of the above "predetermined time" may be a time point at which the temperature of the furnace reaches 300°C or a time point at which the beginning of the plastic decomposition has been detected.

Semiconductor material

The semiconductor material may be placed in the furnace together with the plastic-containing material, or the semiconductor material may be placed in the furnace in advance, and then the plastic-containing material may be placed adjacent to or in contact with the semiconductor material.

In an embodiment of the first invention of the present disclosure, the plastic-containing material, which is subjected to a heat treatment, and the semiconductor material are arranged so that they are spaced apart from each other at a distance of less than or equal to 50 mm. For this purpose, for example, a spacer can be used which is arranged between the plastic-containing material and the semiconductor material. In this case, although the lower limit of the distance is not particularly limited, it may be more than 0 mm, more than 1 mm, more than 5 mm, or more than 10 mm.

The distance between the plastic-containing material and the semiconductor material can be measured at the location where they are closest to each other.

In another preferred embodiment according to the first invention of the present disclosure, the plastic-containing material, which is subjected to a heat treatment, and the semiconductor material are placed in contact with each other.

There is no particular limitation as to how the plastic-containing material and the semiconductor material are in contact with each other. For example, they can be brought into contact with each other by placing the plastic-containing material on the semiconductor material. Further, the plastic-containing material may be placed on the semiconductor material which is carried on the surface of a carrier. In addition, they may be brought into contact with each other by surrounding or covering at least part of or all of the plastic-containing material with the semiconductor material.

The semiconductor material is not particularly limited as long as it is stable under the temperature and oxygen concentration used in the present invention. The semiconductor material contains, for example, at least one selected from the group consisting of the following materials:

$BeO$, $MgO$, $CaO$, $SrO$, $BaO$, $CeO_2$, $ThO_2$, $UO_3$, $U_3O_8$, $TiO_2$, $ZrO_2$, $V_2O_5$, $Y_2O_3$, $Y_2O_2S$, $Nb_2O_5$, $Ta_2O_5$, $MoO_3$, $WO_3$, $MnO_2$, $Fe_2O_3$, $MgFe_2O_4$, $NiFe_2O_4$, $ZnFe_2O_4$, $ZnCo_2O_4$, $ZnO$, $CdO$, $Al_2O_3$, $MgAl_2O_4$, $ZnAl_2O_4$, $Tl_2O_3$, $In_2O_3$, $SiO_2$, $SnO_2$, $PbO_2$, $UO_2$, $Cr_2O_3$, $MgCr_2O_4$, $FeCrO_4$, $CoCrO_4$, $ZnCr_2O_4$, $WO_2$, $MnO$, $Mn_3O_4$, $Mn_2O_3$, $FeO$, $NiO$, $CoO$, $Co_3O_4$, $PdO$, $CuO$, $Cu_2O$, $Ag_2O$, $CoAl_2O_4$, $NiAl_2O_4$, $Tl_2O$, $GeO$, $PbO$, $TiO$, $Ti_2O_3$, $VO$, $MoO_2$, $IrO_2$, $RuO_2$, $CdS$, $CdSe$, $CdTe$, $Cu_2O$, $Sb_2O_3$, $MnO_3$, and $CoCrO_4$.

Preferably, the semiconductor material is an oxide semiconductor material. Preferred oxide semiconductor materials include chromium oxide, titanium oxide, zinc oxide, vanadium oxide, tungsten oxide, molybdenum oxide, cobalt oxide, iron oxide, and copper oxide.

The form of the semiconductor material is not particularly limited, and it may be, for example, a plate shape, a granular shape, or a honeycomb shape. From the viewpoint of promoting the decomposition of a plastic, it is preferable that the semiconductor material is carried on the surface of a carrier having air permeability. Examples of the carrier having air permeability include a porous body made of ceramics, etc., and a support having a honeycomb shape. The semiconductor material may be a sintered body of a semiconductor.

Two-stage heating

A heat treatment method according to a preferred embodiment of the first invention of the present disclosure comprises:

subjecting the plastic-containing material, which has been subjected to the heat treatment at the first surface temperature, to a heat treatment in an atmosphere having an oxygen concentration of 10% by volume or more in the presence of a semiconductor material.

The heat treatment at an oxygen concentration of 10% by volume or more is preferably performed under an oxygen concentration of more than 10% by volume, 12% by volume or more, 15% by volume or more, or 20% by volume or more, and/or is performed under an oxygen concentration of 30% by volume or less, or 25% by volume or less.

In this embodiment, which may also be referred to as two-stage heating, the plastic-containing material, which has been subjected to a heat treatment at a relatively low oxygen concentration, is subjected to a further heat treatment under an increased oxygen concentration.

In the initial stage of the thermal decomposition of a plastic, since the amount of the plastic is relatively high, there is a high possibility that the oxidation-induced excessive heat is generated. On the other hand, in the above-described embodiment with two-stage heating, after a heat treatment at a relatively low oxygen concentration was performed, a heat treatment under an increased oxygen concentration is performed. In other words, since the heating under the higher oxygen concentration is performed at a stage where the amount of the plastic has been reduced due to the progress of the decomposition of the plastic, it is possible to suppress the generation of the oxidation-induced excessive heat.

In addition, in the heat treatment at a relatively low oxygen concentration, a part of the plastic may not been vaporized and remain as a carbide. On the other hand, in the above two-stage heating embodiment, since the further heat treatment is performed under an increased oxygen concentration, it is possible to efficiently decompose and remove the residual carbides, and as a result, it is possible to further improve the decomposition efficiency.

With regard to the heat treatment under the introduction of a low oxygen concentration gas having an oxygen concentration of less than 10% by volume and the heat treatment under an oxygen concentration of 10% by volume or more, these heat treatments can be performed continuously in the same furnace. In other words, for example, after a plastic-containing material has been heated to the first surface temperature, the oxygen concentration can be increased to 10% by volume or more in the same furnace, and a further heat treatment can be performed. In the conventional plastic decomposition method, after a batch processing, it was necessary to process a material to be treated, for example by shredding. On the other hand, when the heat treatment under the introduction of a low oxygen concentration gas having less than 10% by volume of oxygen concentration and the heat treatment under an oxygen concentration of 10% by volume or more are performed continuously in the same furnace, it is possible to omit the process steps.

The atmosphere having an oxygen concentration of 10% by volume or more can be formed, for example, by introducing a high oxygen concentration gas having an oxygen concentration of 10% by volume or more into the furnace, and in particular, by introducing air and/or oxygen gas into the furnace. The oxygen concentration of the high oxygen concentration gas may be more than 10% by volume, 12% by volume or more, 15% by volume or more, or 20% by volume or more, and/or 30% by volume or less, or 25% by volume or less.

In the heat treatment at an oxygen concentration of 10% by volume or more, the semiconductor material used in the heat treatment at the first surface temperature can be used.

Second surface temperature

In a particular embodiment, the plastic-containing material subjected to the heat treatment at the first surface temperature is heated to a second surface temperature in an atmosphere having an oxygen concentration of 10% by volume or more, in the presence of a semiconductor material.

The "second surface temperature" is a surface temperature of the plastic-containing material to be treated. The "second surface temperature" can be determined by measuring the temperature within 5 mm from the plastic-containing material during the heat treatment, in the same way as in the "surface temperature" and the "first surface temperature" described above.

The second surface temperature may range from 400°C to 600°C. More preferably, the second surface temperature is 425°C to 575°C, or 450°C to 550°C.

If the second surface temperature is lower than the above range, the decomposition efficiency may not be improved. Further, if the second surface temperature exceeds the above range, when the plastic-containing material comprises a valuable material such as a carbon fiber, deterioration and/or burnout of the valuable material such as a carbon fiber due to the heating in the presence of oxygen may become prominent.

The second surface temperature may be substantially the same as the first surface temperature.

Further, the second surface temperature may be greater than or equal to the first surface temperature, or may be greater than the first surface temperature by at least 5°C, by at least 10°C, by at least 25°C, by at least 50°C, or by at least 75°C. The upper limit of the difference between the first surface temperature and the second surface temperature is not particularly limited, but may be, for example, 200°C or less, or 100°C or less.

The heat treatment under an oxygen concentration of 10% by volume or more can be performed for a predetermined time. This predetermined time may be, for example, 1 minute to 600 minutes, 60 minutes to 360 minutes, or 90 minutes to 300 minutes.

Application

According to the method of the first invention of the present disclosure for decomposing a plastic-containing material, it is possible to efficiently vaporize and decompose a wide variety of plastics. The decomposing method according to the first invention of the present disclosure can also be applied to other materials such as volatile organic compounds (VOC), flue gas, and particulate matter (PM), and can also be used for treating exhaust gas.

(Method for recovering inorganic material or metallic material)

Method for recovering inorganic material

The first invention of the present disclosure also relates to a method for recovering an inorganic material contained in a plastic composite material.

In an embodiment of the recovery method according to the first invention of the present disclosure, the plastic-containing material as a plastic composite material contains a plastic and an inorganic material, the recovery method comprising:

decomposing a plastic contained in the plastic-containing material by the decomposing method according to the first invention of the present disclosure, in order to recover the inorganic material.

For details of the decomposing method that can be used in the recovery method according to the first invention of the present disclosure, reference can be made to the above description regarding the decomposition method of the plastic-containing material.

As described above, according to the decomposing method of the first invention of the present disclosure, it is possible to efficiently decompose a plastic. Therefore, according to the recovery method of the first invention of the present disclosure, since the plastic contained in the plastic composite material can be efficiently and selectively decomposed, it is possible to efficiently recover an inorganic material having good physical properties.

Further, in the recovery method according to the first invention of the present disclosure, an inorganic material can be recovered without crushing the plastic composite material. However, it should be noted that crushing of the plastic composite material is not particularly excluded, and crushing of the plastic composite material can be optionally performed.

In addition, in the case of recovering an inorganic material from a plastic composite material, it is necessary to suppress the influence of the heat treatment on the inorganic material as much as possible, from the viewpoint of maintaining the quality of the recovered inorganic material. In this regard, in the decomposing method according to the first invention of the present disclosure, the generation of the oxidation-induced excessive heat is suppressed thanks to a relatively low oxygen concentration. Therefore, according to the recovery method of the first invention of the present disclosure, it is possible to recover an inorganic material having better physical properties.

Two-stage heating

In another embodiment of the recovery method according to the first invention of the present disclosure, a plastic-containing material as a plastic composite material is subjected to the two-stage heating. More specifically, the plastic composite material is subjected to a heat treatment under the introduction of a low oxygen concentration gas (having an oxygen concentration of less than 10%) and subsequent heat treatment under an oxygen concentration of 10% by volume or more, in order to decompose a plastic and to recover an inorganic material.

When an inorganic material is recovered, it is desirable to suppress the deterioration of the physical properties of the inorganic material due to the oxidation-induced excessive heat, and further, it is preferable to suppress the deterioration of the physical properties of the inorganic material, which is caused by a carbonization of a plastic and an adhesion of the residue thereof on the inorganic material. In this regard, in the embodiment in which the plastic composite material is subjected to the two-stage heating, since a relatively low oxygen concentration is used in the initial stage where the oxidation-induced excessive heat tends to be generated, deterioration of the physical properties of the inorganic material caused by the oxidation-induced excessive heat is suppressed. Further, since a further heat treatment is performed under an increased oxygen concentration, the carbonized resin residue on the inorganic material can be efficiently removed. As a result, by the method of recovering an inorganic material through the two-stage heating, it is possible to ensure better physical properties of the recovered inorganic material.

Inorganic Material

The plastic composite material comprising an inorganic material and a plastic includes a fiber-reinforced plastic (FRP), in particular a carbon-fiber-reinforced plastic.

Examples of the inorganic material include an inorganic fiber, such as alumina fiber, ceramic fiber, and silica fiber. In particular, the inorganic fiber is a carbon fiber (a carbon fiber material).

Carbon fiber

Examples of the carbon fiber include, but are not limited to, a PAN-type carbon fiber and a pitch-type carbon fiber. The carbon fiber may be one type or may be composed of two or more types.

The carbon fiber may be in any form, and may be for example, a carbon fiber bundle, a woven fabric formed from carbon fiber bundles, or a non-woven fabric of carbon fibers.

Recovered product

According to an embodiment of the recovery method of the first invention of the present disclosure, a residual carbon derived from the plastic, which is recovered together with the inorganic material, is reduced, and in particular, the residual carbon is 5% by weight or less of the recovered inorganic material. Preferably, the residual carbon is 4% by weight or less, 3% by weight or less, 2% by weight or less, 1% by weight or less, 0.9% by weight or less, 0.5% by weight or less, or 0.1% by weight or less of the recovered inorganic material. Although it is preferable that the residual carbon is reduced as much as possible, the lower limit thereof may be 0.001% by weight or more. The amount of the residual carbon in the recovered inorganic material can be measured in the same manner as the amount of the residual carbon in the regenerated carbon fiber, which will be described later.

Further, according to the recovery method of the first invention of the present disclosure, it is possible to recover a carbon fiber having a physical properties superior to those of a carbon fiber prior to being used for the production of a carbon-fiber-reinforced plastic.

In particular, according to the recovery method of the first invention of the present disclosure, from a carbon-fiber-reinforced plastic, it is possible to obtain, as an inorganic material, a carbon fiber which has the single fiber tensile strength of 3.0 GPa or higher and the Weibull shape parameter of 6.0 or higher.

Single fiber tensile strength

The single fiber tensile strength is preferably 3.1 GPa or higher, 3.2 GPa or higher, 3.3 GPa or higher, or 3.4 GPa or higher. The upper limit of the single fiber tensile strength is not particularly limited, but may be 6.0 GPa or less.

The single fiber tensile strength can be measured according to JIS R7606 as follows:

at least 30 single fibers are collected from a fiber bundle,
the diameters of the single fibers are measured in a side-view image of the single fibers captured by a digital microscope, in order to calculate a cross-sectional area,

the sampled single fibers are fixed to a perforated mount paper using an adhesive,
the mount paper, on which the single fiber has been fixed, is attached to a tensile tester, and a tensile test is performed at 10 mm test length and 1 mm/min strain rate, in order to measure the tensile fracture stress,
the tensile strength is calculated from the cross-sectional area and the tensile fracture stress of the single fiber, and
the average tensile strength of the at least 30 single fibers is determined as the single fiber tensile strength.

(Weibull shape parameter)

The Weibull shape parameter is preferably 6.5 or higher, 7.0 or higher, 7.5 or higher, 8.0 or higher, or 8.5 or higher. The upper limit of the Weibull shape parameter is not particularly limited, but may be 15.0 or less. Incidentally, when the Weibull shape parameter of the single fiber tensile strength is high, it means that the variation of the single fiber tensile strength is small.

The Weibull shape parameter can be calculated according to the following equation:

$$\ln\ln\{1/(1-F)\} = m \times \ln\sigma + C$$

wherein, F is fracture probability determined by the symmetric sample cumulative distribution method, $\sigma$ is the single fiber tensile strength (MPa), m is the Weibull shape parameter, and C is a constant.

By performing Weibull plot of $\ln\ln\{1/(1-F)\}$ and $\ln\sigma$, the Weibull shape parameter m can be obtained, from on the first-order approximated slope.

Method for recovering metal material

In another embodiment of the recovery method according to the first invention of the present disclosure, a metal material is recovered from a plastic-containing material comprising a plastic and a metal material.

More specifically, according to an embodiment of the method of the first invention of the present disclosure, there is provided a method for recovering a metal material, comprising:

decomposing a plastic contained in a plastic-containing material by the decomposing method according to the first invention of the present disclosure, in order to recover a metal material;
wherein the plastic-containing material comprises the plastic and the metal material.

Examples of the metal material include gold and rare metals.

Examples of the plastic composite material containing the metal material and the plastic include composite materials having a metal material encapsulated in a matrix resin, in particular, a solar panel, an electronic components, and an electronic circuit.

Application

According to the recovery method of the first invention of the present disclosure, for example, it is possible to efficiently recover a valuable material such as a reinforcing fiber and a rare metal, by efficiently decomposing only a matrix resin contained in products such as fiber-reinforced plastics (FRP), photovoltaic panels, and electronic circuits.

Regenerated carbon fiber (regenerated carbon fiber material)

The regenerated carbon fiber (regenerated carbon fiber material) according to the first invention of the present disclosure can be produced by recovering a carbon fiber from a carbon-fiber-reinforced plastic. In one embodiment according to the first invention of the present disclosure, the regenerated carbon fiber may have better physical properties than those of a carbon fiber prior to being used for the production of a carbon-fiber-reinforced plastic.

The method for producing the regenerated carbon fiber is not particularly limited. For example, the regenerated carbon fiber can be produced by recovering a regenerated carbon fiber from a carbon-fiber-reinforced plastic by the recovery method according to the first invention of the present disclosure.

In one embodiment, the regenerated carbon fiber has the single fiber tensile strength of 3.0 GPa or higher and the Weibull shape parameter of 6.0 or higher. The single fiber tensile strength and the Weibull shape parameter can be measured and determined by the methods described above.

The single fiber tensile strength of the regenerated carbon fiber is preferably 3.1 GPa or higher, 3.2 GPa or higher, 3.3 GPa or higher, or 3.4 GPa or higher. The upper limit of the single fiber tensile strength is not particularly limited, but may be 6.0 GPa or less.

The Weibull shape parameter of the regenerated carbon fiber is preferably 6.5 or higher, 7.0 or higher, 7.5 or higher, 8.0 or higher, or 8.5 or higher. The upper limit of the Weibull shape parameter is not particularly limited, but may be 15.0 or less.

Method for producing regenerated carbon fiber (regenerated carbon fiber material)

In particular, a method for producing a regenerated carbon fiber having the single fiber tensile strength of 3.0 GPa or higher and the Weibull shape parameter of 6.0 or higher comprises:

heating a plastic-containing material to a first surface temperature in the presence of a semiconductor material in an atmosphere of a furnace into which a low oxygen concentration gas having an oxygen concentration of less than 10% by volume is introduced, in order to decompose a plastic contained in the plastic-containing material, wherein the plastic-containing material is a carbon-fiber-reinforced plastic containing the carbon fiber.

In particular, a method for producing a regenerated carbon fiber having the single fiber tensile strength of 3.0 GPa or higher and the Weibull shape parameter of 6.0 or higher comprises:

heating a plastic-containing material to a first surface temperature in the presence of a semiconductor material in an atmosphere of a furnace into which a low oxygen concentration gas having an oxygen concentration of less than 10% by volume is introduced, and heating the plastic-containing material, which has been subjected to the heat treatment at the first surface temperature, in the presence of a semiconductor material in an atmosphere having an oxygen concentration of 10% by volume or more, in order to decompose a plastic contained in the plastic-containing material wherein the plastic-containing material is a carbon-fiber-reinforced plastic containing the carbon fiber.

In a preferred embodiment of the method for producing a regenerated carbon fibers according to the first invention of the present disclosure, a low oxygen concentration gas having an oxygen concentration of less than 10% by volume is introduced into the atmosphere of the furnace while the surface temperature of the plastic-containing material is less than 300°C.

Residual carbon

Preferably, in the regenerated carbon fiber according to the first invention of the present disclosure, the amount of a residual carbon (a residual carbon component) is reduced, and in particular, the residual carbon is 5% by weight or less with respect to the regenerated carbon fiber. More preferably, the residual carbon is 4% by weight or less, 3% by weight or less, 2% by weight or less, 1% by weight or less, 0.9% by weight or less, 0.5% by weight or less, or 0.1% by weight or less, with respect to the regenerated carbon fiber. It is preferable that the amount of the residual carbon is reduced as much as possible, and the lower limit thereof is not particularly limited; however, it may be, for example, 0.01% by weight or more, with respect to the regenerated carbon fiber.

Note that the "residual carbon" is a carbonized component derived from a plastic contained in a carbon-fiber-reinforced plastic, which is a raw material used in the production of the regenerated carbon fiber.

The amount of the residual carbon (the residual carbon component) in a regenerated carbon fiber can be determined by thermogravimetric analysis (TGA).

The determination of a residual carbon content by thermogravimetric analysis can be performed by the following procedures:

(i) For 1 to 4 mg sample fragments obtained by pulverizing a regenerated carbon fiber, the thermogravimetric analysis is performed with a thermogravimetric analyzer under conditions of 0.2 L/min air supply rate, 5°C/min heating rate and 1/6 s recording rate, wherein the analysis being conducted for a total of 300 minutes with the following steps:

increasing the temperature from room temperature to 100°C,
holding the temperature at 100°C for 30 minutes,
increasing the temperature from 100°C to 400°C, and
holding the temperature at 400°C

(ii) in a graph prepared by plotting weight loss rate to time, an inflection point of the slope is specified, and a weight loss rate during the holding step at 100°C is subtracted from a weight loss rate at the inflection point, in order to calculate the residual carbon amount.

If the inflection point of the slope cannot be identified under the above conditions, thermogravimetric analysis can be performed for a total of about 600 minutes with a step of holding at 400°C for 480 minutes, instead of performing a thermogravimetric analysis for a total of 300 minutes as above. Further, instead of holding at 400°C for 480 minutes, it is also possible to hold for 480 minutes at a specific temperature in the range of greater than 400°C and 500°C or less.

Incidentally, if the regenerated carbon fiber has a resin, which may be for example derived from a sizing agent, the measurement described above can be performed after that resin has been removed.

In particular, with regard to the method for producing a regenerated carbon fiber having the single fiber tensile strength of 3.0 GPa or higher and the Weibull shape parameter of 6.0 or higher and having more than 0% by weight and 5.0% by weight or less of a residual carbon component with respect to the regenerated carbon fiber, the method comprises:

> heating a plastic-containing material to a first surface temperature in the presence of a semiconductor material in an atmosphere of a furnace into which a low oxygen concentration gas having an oxygen concentration of less than 10% by volume is introduced, in order to decompose a plastic in the plastic-containing material,
> wherein the plastic-containing material is a carbon-fiber-reinforced plastic containing a carbon fiber.

Further, in particular, with regard to the method for producing a regenerated carbon fiber having the single fiber tensile strength of 3.0 GPa or higher and the Weibull shape parameter of 6.0 or higher and having more than 0% by weight and 5.0% by weight or less of a residual carbon component with respect to the regenerated carbon fiber, the method comprises:

> heating a plastic-containing material to a first surface temperature in the presence of a semiconductor material in an atmosphere of a furnace into which a low oxygen concentration gas having an oxygen concentration of less than 10% by volume is introduced, and heating the plastic-containing material, which has been subjected to the heat treatment at the first surface temperature, in an atmosphere having an oxygen concentration of 10% by volume or more in the presence of a semiconductor material, in order to decompose a plastic in the plastic-containing material,
> wherein the plastic-containing material is a carbon-fiber-reinforced plastic containing a carbon fiber.

(The second present invention)

The second invention of the present disclosure relates to a blended spun yarn of a regenerated carbon fiber and a thermoplastic resin fiber, and to a carbon-fiber-reinforced thermoplastic resin pellet formed from this blended spun yarn. The second invention of the present disclosure also relates to methods for producing them.

The blended spun yarn of a regenerated carbon fiber and a thermoplastic resin fiber according to the second invention of the present disclosure is characterized in that:

> the regenerated carbon fiber has the single fiber tensile strength of 3.0 GPa or higher and the Weibull shape parameter of 6.0 or higher; and
> the regenerated carbon fiber contains a residual carbon component, and the content of the residual carbon component is more than 0% by weight and 5.0% by weight or less with respect to the regenerated carbon fiber.

The blended spun yarn according to the second invention of the present disclosure can be produced by a common spinning method. The spinning method may include the steps of carding, drawing, and roving; wherein the carding step may be a step of breaking up and opening an aggregate of discontinuous fibers, and orienting the mixed single fibers in one direction to produce a thick sliver; the drawing step may be a step of combining and stretching several slivers in order to improve the degree of fiber orientation; and the roving step may be a step of further stretching and twisting the sliver in order to wind the blended spun yarn.

Tensile strength of the sliver is derived from a frictional force generated due to the contact or entanglement of the single fibers. Therefore, when each fiber opens well and the contact area or entanglement between the single fibers is increased, tensile strength is improved. Further, in this case, the decrease in tensile strength can be suppressed since the single fiber breakage is suppressed and thus the seams between the single fibers do not increase. Increasing the twist also improves the tensile strength, because it increases the contact area between the single fibers. To further supplement the frictional force, an oil agent may be applied to each fiber or the sliver as necessary.

In general, carbon fibers do not exhibit much entanglement between single fibers since they are rarely crimped and have higher surface smoothness. Further, since carbon fibers have high elastic modulus and low elongation and thus they are hard, they are relatively easily broken and cut. The thermoplastic resin fiber blended with the regenerated carbon fiber has an effect of enhancing entanglement between single fibers, and therefore by blending the thermoplastic resin fibers even in a small amount, the tensile strength of the sliver is greatly improved.

Without wishing to be bound by theory, it is considered that since the blended spun yarn according to the second invention of the present disclosure has a high Weibull shape parameter with regard to the single fiber tensile strength of the regenerated carbon fiber, the variation in the tensile strength is small; and since the percentage of single fibers having low tensile strength is relatively low even in comparison with a common unused carbon fiber having an equivalent tensile strength, the single fiber breakage of the regenerated carbon fiber is relatively suppressed.

Further, with regard to the general features of the regenerated carbon fiber obtained by the method of thermal decomposition, oxidation defects tend to be generated in the regenerated carbon fiber and therefore the tensile strength tends to be easily lowered, and carbides of a resin component are comprised in the regenerated carbon fiber as a residual carbon component. The residual carbon component may facilitate a firm bonding between the single fibers of the regenerated carbon fiber. Further, it is considered that, in the production of a spun yarn, the residual carbon component interferes with the opening process in the carding step and the entanglement of single fibers.

Without wishing to be bound by theory, since the blended spun yarn according to the second invention of the present disclosure uses, as a raw material, a regenerated carbon fiber having a relatively low content of a residual carbon component, entanglement between single fibers is relatively easily obtained.

For the above-mentioned reasons, it is considered that, in the blended spun yarn according to the second invention of the present disclosure, since the frictional force is relatively easily obtained due to the entanglement of the single fibers, falling-off of yarns hardly occurs under the tension of the spinning process and a tensile strength is easily obtained which is sufficient for the stable production.

The second invention of the present disclosure also includes a carbon-fiber-reinforced thermoplastic resin pellet comprising the blended spun yarn described above. This carbon-fiber-reinforced thermoplastic resin pellet is characterized in that:

it has a core-sheath structure comprised of a core component and a sheath component,
the blend spun yarn is the core component, and
a thermoplastic resin is the sheath component.

The carbon-fiber-reinforced thermoplastic resin pellet according to the second invention of the present disclosure can be produced in the same manner as in the common method for producing a long-fiber-reinforced pellet, except that the blended spun yarn according to the second invention of the present disclosure is used instead a continuous carbon fiber, by cutting a resin strand obtained by coating the blended spun yarn with a thermoplastic resin. Therefore, it is possible to contain regenerated carbon fibers having longer fiber length, as compared with a short-fiber-reinforced pellet which is produced by cutting a resin strand obtained by kneading and dispersing a discontinuous carbon fiber in a thermoplastic resin. In other word, by supplying the carbon-fiber-reinforced thermoplastic resin pellets according to the second invention of the present disclosure to an injection molding machine, etc., it is possible to produce a carbon-fiber-containing product having excellent properties such as excellent mechanical properties.

Hereinafter, the second invention according to the present disclosure will be described in more detail.

Regenerated carbon fiber

A regenerated carbon fiber (may also be called as a recycled carbon fiber) includes a carbon fiber component and a carbon component (which is in particular a residual carbon component) other than the carbon fiber component. Usually, in the regenerated carbon fiber, the carbon component other than the carbon fiber component is attached to the surface of the carbon fiber component.

The regenerated carbon fiber according to the second invention of the present disclosure is characterized in that it has 3.0 GPa or higher of the single fiber tensile strength and 6.0 or higher of the Weibull shape parameter, and that it has a residual carbon component and the content of the residual carbon component is more than 0% by weight and 5.0% by weight or less with respect to the regenerated carbon fiber.

A recovery method to obtain the regenerated carbon fiber having the above characteristics is not particularly limited, but it may be a regenerated carbon fiber obtained by a heat treatment of a carbon-fiber-containing plastic product such as a carbon-fiber-reinforced plastic (CFRP).

Particularly preferably, the regenerated carbon fiber is a regenerated carbon fiber obtained by the thermal activation of semiconductors method. In other words, a particularly preferred embodiment of the present disclosure includes a regenerated carbon fiber which is produced by decomposing a plastic component contained in a carbon-fiber-containing plastic product by the thermal activation of semiconductors method.

Incidentally, the "thermal activation of semiconductors method" (TASC method) is a method of decomposing a compound to be decomposed, such as a polymer, using a thermal activation of semiconductors (Thermal Activation of Semi-Conductors, TASC).

With regard to a method for obtaining the regenerated carbon fiber having the characteristics according to the second invention of the present disclosure using the thermal activation of semiconductors method, reference may be made to the above description of the first invention. More specifically, by recovering a carbon fiber from a plastic-containing material containing a plastic and a carbon fiber in accordance with the above-described decomposing method of the first invention of the present disclosure, the regenerated carbon fiber having the characteristics according to the second invention of the present disclosure (as well as the third and fourth inventions of the present disclosure) can be obtained.

Single fiber tensile strength

The single fiber tensile strength is preferably 3.1 GPa or higher, 3.2 GPa or higher, 3.3 GPa or higher, or 3.4 GPa or higher. The upper limit of the single fiber tensile strength is not particularly limited, but it may be 6.0 GPa or less.

The single fiber tensile strength can be measured according to JIS R7606, as described above with regard to the first present invention.

Weibull shape parameter

The Weibull shape parameter is preferably 6.5 or higher, 7.0 or higher, 7.5 or higher, 8.0 or higher, or 8.5 or higher. The upper limit of the Weibull shape parameter is not particularly limited, but may be 15.0 or less. Incidentally, if the value of the Weibull shape parameter of the single fiber tensile strength is high, it indicates that the variation of the single fiber tensile strength is small.

The Weibull shape parameter can be calculated as described above with respect to the first present invention.

Carbon fiber component

The carbon fiber component in the regenerated carbon fiber is usually derived from a carbon fiber contained in a carbon-fiber-containing product, etc., used as a raw material in the production of the regenerated carbon fiber. The carbon fiber component in the regenerated carbon fiber may be modified during the production of the regenerated carbon fiber by being subjected to a treatment such as a heat treatment.

The carbon fiber component in the regenerated carbon fiber may be, for example, a PAN-type carbon fiber or a pitch-type carbon fiber.

The form of the carbon fiber component in the regenerated carbon fiber is not particularly limited, but it may be a form of a carbon fiber bundle composed of a plurality of single yarns (single fibers, filaments). The number of filaments constituting the carbon fiber bundle may range from 1,000 to 80,000, or from 3,000 to 50,000. In addition, the diameter of the filaments constituting the carbon fiber component in the regenerated carbon fiber may be 0.1 $\mu$m to 30 $\mu$m, 1 $\mu$m to 10 $\mu$m, or 3 $\mu$m to 8 $\mu$m.

Residual carbon component

The residual carbon component contained in the regenerated carbon fiber is in particular a residual carbon derived from a resin contained in a carbon-fiber-containing plastic product used as a raw material in the production of the regenerated carbon fiber.

In the second invention of the present disclosure, the residual carbon component is more than 0% by weight and 5.0% by weight or less with respect to the regenerated carbon fiber. In this case, it is possible to obtain a blended spun yarn in which the falling-off of yarns under a tension during the spinning process is suppressed.

In addition, when the residual carbon component is more than 0% by weight and 5.0% by weight or less, it is possible to avoid contamination caused by a relatively large amount of the carbon component (in particular, charcoal), and it is also possible to reduce a carbon component which can be a foreign substance when a product such as a carbon-fiber-containing product is produced using the blended spun yarn as a raw material.

Preferably, the residual carbon component is 4.0% by weight or less, 3.0% by weight or less, or 2.0% by weight or less, with respect to the regenerated carbon fiber. It is preferable that the residual carbon component is reduced as much as possible, but may be 0.01% by weight or more, 0.1% by weight or more, 0.2% by weight or more, 0.4% by weight or more, 0.6% by weight or more, 0.8% by weight or more, 1.0% by weight or more, or 1.2% by weight or more, with respect to the carbon fiber.

The content of the residual carbon component in the regenerated carbon fiber can be measured by thermogravimetric analysis (TGA method) as described above with respect to the first invention of the present disclosure.

Thermoplastic resin fiber

The thermoplastic resin fiber contained in the blended spun yarn according to the second invention of the present disclosure includes polyolefin resin fibers (e.g., polypropylene resin fibers and polyethelene resins fibers), polyester resin fibers (e.g., polyethlene terephthalate resin fibers, polybutylene terephthalate resin fibers, and polylactic acid resin fibers), polyamide resin fibers, polyetherketone resin fibers, polycarbonate resin fibers, phenoxy resin fibers, and polyphenylenesulfide resin fibers. The thermoplastic resin fiber may be composed of only one type or a mixture of two or more thermoplastic resin fibers.

Blended spun yarn

The blended spun yarn according to the second present invention is a spun yarn comprising a regenerated carbon fiber and a thermoplastic resin fiber. The blended spun yarn may comprise, for example, a binder, etc., which is applied to the regenerated carbon fiber. The blended spun yarn may also be a spun yarn substantially consisting of a regenerated carbon fiber and a thermoplastic resin fiber.

Content of regenerated carbon fiber

The content of the regenerated carbon fiber comprised in the blended spun yarn according to the second present invention is preferably more than 50% by weight and 98% by weight or less with respect to the blended spun yarn. Particularly preferably, it may be more than 55% by weight, more than 60% by weight, more than 65% by weight, or more than 70% by weight, and/or, may be 97% by weight or less, 96% by weight or less, 95% by weight or less, 94% by weight or less, 93% by weight or less, 92% by weight or less, 91% by weight or less, or 90% by weight or less.

If the content of the regenerated carbon fiber is more than 50% by weight, when the carbon-fiber-reinforced thermoplastic resin pellet according to the present disclosure is produced from this regenerated carbon fiber, it is not necessary to reduce the coating amount of the thermoplastic resin to increase the carbon fiber content, and thus the stability of the coating treatment is improved. When the content of the regenerated carbon fiber is 98% by weight or less, it is possible to obtain sufficient entanglement with the thermoplastic resin fiber which is blended with the regenerated carbon fiber, and a falling-off of yarns under a tension during the spinning process is suppressed.

The content of the thermoplastic resin fiber comprised in the blended spun yarn according to the second present invention may be 50% by weight or less, 40% by weight or less, or 30% by weight or less, and/or may be more than 3% by weight, more than 4% by weight, more than 5% by weight, more than 6% by weight, more than 7% by weight, more than 8% by weight, more than 9% by weight, or more than 10% by weight, with respect to the blended spun yarn.

Average fiber length

The regenerated carbon fiber comprised in the blended spun yarn according to the second present invention may have an average length of 20 mm or more and 80 mm or less. The fiber having the length in this range can be obtained, for example, by cutting a fiber having a longer length. The average length of the regenerated carbon fiber may be 20 mm or more, 30 mm or more, or 40 mm or more, and/or 80 mm or less, 70 mm or less, or 60 mm or less.

The thermoplastic resin fiber comprised in the blended spun yarn according to the second present invention may have an average length of 20 mm or more and 80 mm or less. The fiber having the length in this range can be obtained, for example, by cutting a fiber having a longer length. The average length of the thermoplastic resin fiber may be 20 mm or more, 30 mm or more, or 40 mm or more, and/or 80 mm or less, 70 mm or less, or 60 mm or less.

In the production of the blended spun yarn according to the second present invention, when the average length of the regenerated carbon fiber and the thermoplastic resin fiber is 20 mm or more, it is possible to improve resistance to a falling-off of yarns under a tension during the spinning process of a sliver. If the average length of the regenerated carbon fiber and the thermoplastic resin fiber is 80 mm or less, it is possible to prevent them from being wound around a production equipment member.

The average length of each of the regenerated carbon fiber and the thermoplastic resin fiber can be calculated by measuring the length of 50 fibers visually using a caliper, etc., or in an image obtained by a digital camera or an optical microscope, etc., and by averaging the measured values.

Method for producing blended spun yarn

As described above, the blended spun yarn of the regenerated carbon fiber and the thermoplastic resin fiber according to the second invention of the present disclosure can be produced by a common spinning process. More specifically, a method for producing the blended spun yarn according to the second invention of the present disclosure may include a carding step in which aggregates of discontinuous fibers are separated and opened and the mixed single fibers are oriented in one direction to produce a thick sliver, a drawing step in which several slivers are combined and stretched in order to improve the degree of the fiber orientation, and a roving step in which the sliver is further stretched and twisted in order to wind the blended spun yarn.

In the production of the blend spun yarn according to the second present invention, a binder can be applied. The binder serves in particular to promote the bonding of the regenerated carbon fiber to the thermoplastic resin fiber. The timing at which the binder is applied is not particularly limited, but it may be directly applied to the regenerated carbon fiber, or may be applied to the blended spun yarn comprising the regenerated carbon fiber and the thermoplastic resin fiber. The binder may be, for example, an epoxy-based resin. A method of applying the binder is not particularly limited, and a known method can be used. For example, the binder can be applied by immersing the regenerated carbon fiber or blended spun yarn in a solution or dispersion of the binder and by drying. The amount of the binder may be 0.1% by weight to 25% by weight, or 1% by weight to 20% by weight with respect to the regenerated carbon fiber.

Carbon-fiber-reinforced thermoplastic resin pellet

According to the second invention of the present disclosure, there is provided a carbon-fiber-reinforced thermoplastic resin pellet having a core-sheath structure, in which the core component is the blended spun yarn according to the second invention of the present disclosure and the sheath component is a thermoplastic resin. The pellet according to the second invention of the present disclosure contains a regenerated carbon fiber having longer fiber length as compared with a short-fiber-reinforced pellet obtained by kneading and dispersing regenerated carbon fibers in a thermoplastic resin, and therefore, by being supplied to an injection molding machine, etc., it is possible to produce a carbon-fiber-containing product having excellent properties such as excellent mechanical properties.

Method for producing carbon-fiber-reinforced thermoplastic resin pellet

The carbon-fiber-reinforced thermoplastic resin pellet having a core-sheath structure according to the second invention of the present disclosure can be produced by a method in which a carbon-fiber-reinforced thermoplastic resin strand is produced by coating a blended spun yarn with a thermoplastic resin and then the strand is cut. More specifically, as described above, it can be produced in the same manner as in a common method for producing a long-fiber-reinforced pellet except that the blended spun yarn according to the second invention of the present disclosure is used instead of a continuous carbon fiber, by cutting a resin strand coated with a thermoplastic resin. More specifically, it can be produced by a method comprising a coating step in which a blended spun yarn, which is continuously conveyed while being rewound, is passed through a die into which a melted thermoplastic resin is continuously supplied from a supply port other than that for the blended spun yarn, and a cutting step in which a carbon-fiber-reinforced thermoplastic resin strand discharged from the die is cooled and then cut.

Thermoplastic resin

Examples of the thermoplastic resin used for the coating treatment in the production of the pellet according to the second present invention (i.e., the thermoplastic resin constituting the sheath component of the pellet) include polyolefin resins (for example, polypropylene resins and polyethylene resins), polyester resins (for example, polyethylene terephthalate resins, polybutylene terephthalate resins, and polylactic acid resins), polyamide resins, polyether ketone resins, polycarbonate resins, phenoxy resins, and polyphenylenesulfide resins. The thermoplastic resin may be only one type or may be a mixture of two or more types of thermoplastic resins.

Further, the thermoplastic resin constituting the sheath component of the pellet according to the second present invention may be the same type as the thermoplastic resin fiber included in the blend spun yarn according to the second invention of the present disclosure, or may be different therefrom. In particular, it is preferable that the melting point ($T0$ (°C)) of the thermoplastic resin constituting the sheath component of the pellet is more than 10 (°C) lower than the melting point ($T1$ (°C)) of the thermoplastic resin fiber contained in the blended spun yarn according to the present disclosure. In this case, when the carbon-fiber-reinforced thermoplastic resin pellet according to the present disclosure is produced, it is possible to easily determine the production condition so that the melting of the thermoplastic resin fibers contained in the blended spun yarn is suppressed and only the thermoplastic resin which coats the blended spun yarn is melted, and therefore it may be possible to stably pass the blended spun yarn through the die. The upper limit of the difference between $T1$ and $T0$ (i.e., $T1-T0$) is not particularly limited, but may be, for example, 200 (°C) or less, 150 (°C) or less, 100 (°C) or less, or 50 (°C) or less.

Further, various polymers, fillers, stabilizers, pigments, etc., may be blended with the thermoplastic resin used in the coating treatment, for the purpose of improving fluidity, gloss of appearance, flame retardant properties, thermal stability, weather resistance, impact resistance, etc., as long as the mechanical strength is not impaired.

Core-sheath structure of pellet

The carbon-fiber-reinforced thermoplastic resin pellet according to the second invention of the present disclosure is produced by cutting (ring-cutting) a carbon-fiber-reinforced thermoplastic resin strand which is obtained by coating the blended spun yarn according to the second invention of the present disclosure with a thermoplastic resin. Thus, the blended spun yarn becomes the core component and the thermoplastic resin becomes the sheath component.

With regard to the proportion of the thermoplastic resin as the sheath component in the carbon-fiber-reinforced thermoplastic resin pellet having the core-sheath structure, the thermoplastic resin as the sheath component is preferably 50 parts by weight to 1000 parts by weight, more preferably 100 parts by weight to 750 parts by weight, and most preferably 250 parts by weight to 500 parts by weight, based on 100 parts by weight of the regenerated carbon fiber contained in the blended spun yarn.

Cut length of pellet

The cutting length of the pellet according to the second present invention is preferably 3 mm or more and 10 mm or less. Particularly preferably, it may be 5 mm or less. Cut length of the pellet in particular corresponds to the length along the axial direction of the core structure of the pellet.

When the cut length of the pellet is 3 mm or more, the average length of the regenerated carbon fiber becomes longer, and thus the mechanical properties, etc., of a carbon-fiber-containing product produced from the pellet as a mold raw material can be further improved. When the cut length of the pellet is 10 mm or less, the regenerated carbon fiber is easily dispersed during the molding process, and the mechanical properties, etc., of the carbon-fiber-containing product can be further improved.

Although there is no particular limitation on the diameter of the above core-sheath type pellet, it may be 1/10 or more and 2 times or less of the cut length of the pellet, and is preferably 1/4 or more and the same length or less of the cut length of the pellet. If the diameter of the pellet is too small, portions that cannot be coated may occur. On the other hand, if the diameter of the pellet is too large, a jamming problem in the molding machine may occur, which may lead to the difficulty in the molding process.

Each of the cut length and the diameter of the pellet can be calculated by measuring the cut lengths or diameters of 30 or more pellets visually using a caliper, etc., or in an image acquired by a digital camera or an optical microscope, etc., and by averaging the measured values.

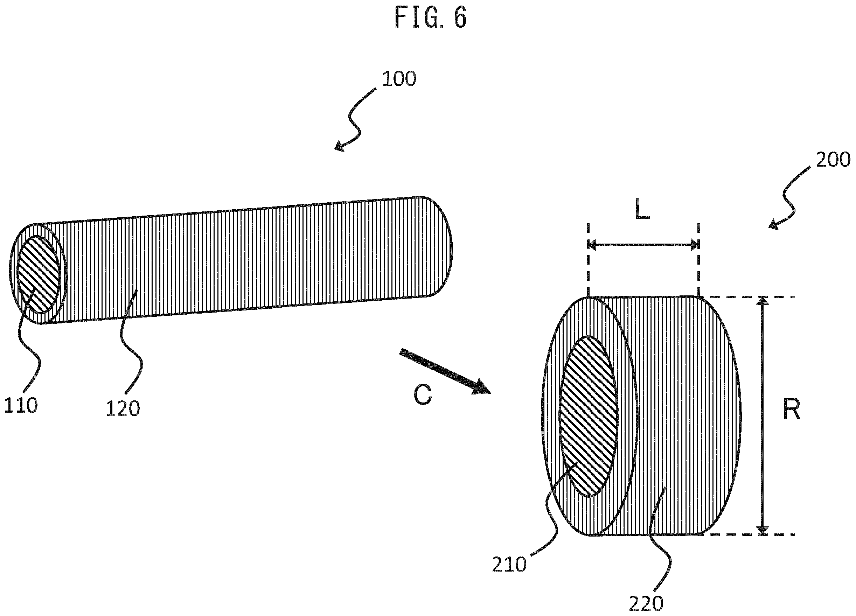

FIG. 6 is a schematic view showing a carbon-fiber-reinforced thermoplastic resin pellet 200 having a core-sheath structure according to the second invention of the present disclosure. The figures are schematic illustrations for the purposes of illustration and are not to scale. The pellet 200 having the core-sheath structure has a core component 210 and a sheath component 220. Further, the pellet 200 has a cut length L and a diameter R. The pellet 200 having the core-sheath structure can be manufactured by cutting (cutting process, "C" in FIG. 6) a carbon-fiber-reinforced thermoplastic resin strand 100 of a core-sheath structure having a core component 110 made of a blended spun yarn and a sheath component 120 made of a thermoplastic resin.

(The third present invention)

The third invention of the present disclosure relates to a carbon-fiber-reinforced thermoplastic resin strand comprising a blended spun yarn of a regenerated carbon fiber and a thermoplastic resin fiber, which is suitable for a three-dimensional molding. A third invention of the present disclosure also relates to a method for producing the same.

The carbon-fiber-reinforced thermoplastic resin strand according to the third invention of the present disclosure comprises a blended spun yarn comprising a regenerated carbon fiber and a thermoplastic resin fiber. The blended spun yarn of the regenerated carbon fiber and the thermoplastic resin fiber is characterized in that:

the regenerated carbon fiber has the single fiber tensile strength of 3.0 GPa or higher and the Weibull shape parameter of 6.0 or higher; and
the regenerated carbon fiber comprises a residual carbon component, and the content of the residual carbon component is more than 0% by weight and 5.0% by weight or less with respect to the regenerated carbon fiber.

In an embodiment according to the third invention of the present disclosure, the carbon-fiber-reinforced thermoplastic resin strand consists of the above-described blended spun yarn.

The blended spun yarn according to the third invention of the present disclosure is produced by a common spinning process, which may include a carding step, a drawing step, and a roving step. For each of these steps, reference can be made to the above description of the second present invention.

Since the tensile strength of the sliver is derived from a frictional force due to contact or entanglement of single fibers, when each fiber opens well and the contact area or entanglement between the single fibers is increased, the tensile strength is improved. Further, in this case, since the single fiber breakage is suppressed and thus the increase of seams between single fibers is suppressed, it is possible to suppress the decrease in the tensile strength. The tensile strength is also improved by increasing the twist, because the contact area between the single fibers increases in this case. In order to supplement the frictional force, an oil agent may be applied to each fiber or the sliver as necessary.

In general, in a carbon fiber, entanglement between single fibers is weak since the carbon fiber is rarely crimped and has higher surface smoothness. Further, since the carbon fibers exhibit high elastic modulus and low elongation and thus they are hard, they are relatively easily broken and cut. The thermoplastic resin fiber blended with the regenerated carbon fiber has an effect of enhancing the entanglement between single fibers, and therefore the tensile strength of the sliver is greatly improved when the thermoplastic resin fiber is blended even in a small amount.

Without wishing to be bound by theory, it is considered that since the blended spun yarn according to the third invention of the present disclosure has high Weibull shape parameter with regard to the single fiber tensile strength of the regenerated carbon fiber, the variation in the tensile strength is small and the percentage of single fibers having lower tensile strength is relatively reduced as compared with an unused typical carbon fiber having an equivalent tensile strength, and thus the single fiber breakage of the regenerated carbon fiber is relatively suppressed.

Further, with regard to the general features of a regenerated carbon fiber obtained by a thermal decomposition method, the tensile strength is easily lowered due to oxidation defects generated in the regenerated carbon fiber, and carbides of a resin component is contained in the regenerated carbon fiber as a residual carbon component. The residual carbon component can cause firm bonding between the single fibers of the regenerated carbon fiber. It is considered that, in the production of a spun yarn, the residual carbon component interferes with the opening process in the carding step and the entanglement of the single fibers.

Without wishing to be bound by theory, since the blended spun yarn according to the third invention of the present disclosure uses, as a raw material, a regenerated carbon fiber having a relatively low content of the residual carbon component, the entanglement between single fibers is relatively easily obtained.

For the above-mentioned reasons, it is considered that since the frictional force due to the entanglement of the single fibers is relatively easily obtained in the blended spun yarn according to the third invention of the present disclosure, falling-off of yarns hardly occurs under a tension during the spinning step, and a tensile strength is easily obtained which is sufficient for the stable production.

In an embodiment according to the third invention of the present disclosure, the carbon-fiber-reinforced thermoplastic resin strand has a core-sheath structure comprising a core component and a sheath component, and is characterized in that:

the blended spun yarn is the core component and a thermoplastic resin is the sheath component.

The carbon-fiber-reinforced thermoplastic resin strand having the core-sheath structure according to one embodiment of the third invention of the present disclosure can be produced in the same manner as in a general method for producing a long-fiber-reinforced strand except that the blended spun yarn according to the third invention of the present disclosure is used instead of a continuous carbon fiber, by coating the blended spun yarn with a thermoplastic resin. Therefore, it can contain a regenerated carbon fiber having longer fiber length as compared with a short-fiber-reinforced thermoplastic resin strand which is obtained by kneading and dispersing discontinuous carbon fibers in a thermoplastic resin. In other words, by being supplied to an injection molding machine or a three-dimensional molding apparatus, etc., the carbon-fiber-reinforced thermoplastic resin strand according to the third invention of the present disclosure can produce a carbon-fiber-containing product having excellent properties such as excellent mechanical properties.

In the following, the third invention of the present disclosure will be described in more detail.

Regenerated carbon fiber, etc.

With regard to the regenerated carbon fiber, the single fiber tensile strength, the Weibull shape parameter, the carbon fiber component in the regenerated carbon fiber, and the residual carbon component comprised in the regenerated carbon fiber, respectively, reference may be made to the corresponding descriptions regarding the second present invention described above.

Thermoplastic resin fiber

With regard to the thermoplastic resin fiber comprised in the blend spun yarn according to the third invention of the present disclosure, reference may be made to the above description regarding the thermoplastic resin fiber according to the second present invention.

Blended spun yarn

The blended spun yarn according to the third present invention is a spun yarn comprising a regenerated carbon fiber and a thermoplastic resin fiber. The blended spun yarn may include, for example, a binder, which is applied to the regenerated carbon fiber. The blended spun yarn is in particular a spun yarn substantially consisting of a regenerated carbon fiber and a thermoplastic resin fiber.

Amount of regenerated carbon fiber and thermoplastic resin fiber

Regarding the contents of the regenerated carbon fiber and the thermoplastic resin fiber comprised in the blended spun yarn according to the third present invention, respectively, reference may be made to the corresponding descriptions regarding the second present invention described above.

Average fiber length

With regard to the average length of the regenerated carbon fiber and thermoplastic resin fiber comprised in the blend spun yarn according to the third invention of the present disclosure, reference may be made to the corresponding descriptions of the second present invention above.

Production method of blended spun yarn

As described above, the blended spun yarn of the regenerated carbon fiber and the thermoplastic resin fiber according to the third invention of the present disclosure can be produced by a common spinning method. For this production method, reference may be made to the above description regarding the method for producing the blended spun yarn according to the second present invention.

A binder can be applied during the production of the blended spun yarn. With regard to the binder, reference may be made to the corresponding description regarding the second present invention above.

Carbon-fiber-reinforced thermoplastic resin strand having a core-sheath structure

According to an embodiment of the third invention of the present disclosure, by coating the blended spun yarn according to the third invention of the present disclosure with a thermoplastic resin, there is provided a carbon-fiber-reinforced thermoplastic resin strand having a core-sheath structure in which the blended spun yarn is the core component and the thermoplastic resin is the sheath component. Since this strand contains regenerated carbon fibers having longer fiber length as compared with a short-fiber-reinforced strand obtained by kneading and dispersing regenerated carbon fibers in a thermoplastic resin, by being supplied to a three-dimensional molding apparatus, etc., it is possible to produce a carbon-fiber-containing product having particularly excellent properties such as excellent mechanical properties.

Method for producing carbon-fiber-reinforced thermoplastic resin strand with core-sheath structure

The carbon-fiber-reinforced thermoplastic resin strand having a core-sheath structure according to one embodiment of the third invention of the present disclosure can be produced by coating a blended spun yarn with a thermoplastic resin, and more specifically, as described above, can be produced in the same manner as a common method for producing a long-fiber-reinforced strand except that the blended spun yarn according to the third invention of the present disclosure is used instead of a continuous carbon fiber, by coating the blended spun yarn with a thermoplastic resin. In other words, it can be produced by a method including a coating step in which a blended spun yarn, which is continuously conveyed while being rewound, is passed through a die into which a melted thermoplastic resin is continuously supplied from a supply port other than that for the blended spun yarn, and a discharging step in which the carbon-fiber-reinforced thermoplastic resin strand is discharged from the die.

Thermoplastic resin

Examples of the thermoplastic resin used for the coating treatment in the above-described production of the carbon-fiber-reinforced thermoplastic resin strand (i.e., the thermoplastic resin as the sheath component of the carbon-fiber-reinforced thermoplastic resin strand having the core-sheath structure) include polyolefin resins (for example, polypropylene resins and polyethylene resins), polyester resins (for example, polyethylene terephthalate resins, polybutylene terephthalate resins, and polylactic acid resins), polyamide resins, polyether ketone resins, polycarbonate resins, phenoxy resins, and polyphenylenesulfide resins. The thermoplastic resin may be only one type or may be a mixture of two or more types of thermoplastic resins.

In addition, the thermoplastic resin as the sheath component of the carbon-fiber-reinforced thermoplastic resin strand may be the same type as the above-described thermoplastic resin fiber contained in the blended spun yarn according to the third invention of the present disclosure, or may be different therefrom. In particular, if the melting point T0 (°C) of the thermoplastic resin as the sheath component of the carbon-fiber-reinforced thermoplastic resin strand is lower than the melting point T1 (°C) of the thermoplastic resin fiber contained in the blend spun yarn according to the third invention of the present disclosure (in particular, in the case where T1-T0>10 (°C)), when the carbon-fiber-reinforced thermoplastic resin strand according to the third invention of the present disclosure is produced, it is possible to coat the blend spun yarn with a thermoplastic resin which has been melted at a temperature lower than the melting point of the thermoplastic resin fiber contained in the blend spun yarn, and therefore the blend spun yarn can be stably passed through a die. Incidentally, although the upper limit of the difference between T1 and T0 (i.e., T1-T0) is not particularly limited, it may be, for example, 200 (°C) or less, 150 (°C) or less, 100 (°C) or less, or 50 (°C) or less.

Further, various polymers, fillers, stabilizers, pigments, etc., can be blended in the thermoplastic resin used in the coating treatment, for the purpose of improving fluidity, gloss appearance, flame retardant properties, thermal stability, weather resistance, impact resistance, etc., as long as the mechanical strength is not impaired.

Core-sheath structure of strand

The carbon-fiber-reinforced thermoplastic resin strand according to an embodiment of the third invention of the present disclosure is produced by coating the blended spun yarn according to the third invention of the present disclosure with a thermoplastic resin, and thus the blended spun yarn becomes the core component and the thermoplastic resin becomes the sheath component.

The carbon-fiber-reinforced thermoplastic resin strand according to the third invention of the present disclosure is particularly suitable for producing a three-dimensional molded article. In addition, from the viewpoint of stably performing the three-dimensional molding, the average diameter of the strand used is preferably 0.7 mm or more and 2.2 mm or less, and more preferably 1.0 mm or more and 2.0 mm or less.

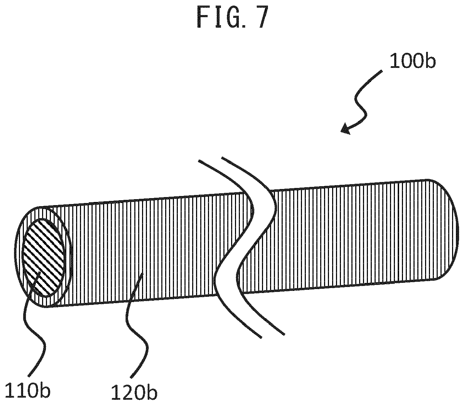

FIG. 7 is a schematic diagram of a carbon-fiber-reinforced thermoplastic resin strand 100b according to the third invention of the present disclosure. The drawing is a schematic illustration for the purpose of illustration, and is not to scale. The strand 100b of FIG. 7 has a core-sheath structure, and has a core-component 110b made of a blended spun yarn and a sheath-component 120b made of a thermoplastic resin.

With regard to the proportion of the thermoplastic resin as the sheath component in the carbon-fiber-reinforced thermoplastic resin strand having the core-sheath structure, the thermoplastic resin as the sheath component is preferably 50 parts by weight to 1000 parts by weight, more preferably 100 parts by weight to 750 parts by weight, and most preferably 250 parts by weight to 500 parts by weight, based on 100 parts by weight of the regenerated carbon fiber contained in the blended spun yarn.

Three-dimensional molded article

The third invention of the present disclosure includes a method of producing a three-dimensional molded article from the carbon-fiber-reinforced thermoplastic resin strand according to the third invention of the present disclosure by a fused deposition method.

In the three-dimensional molding, a three-dimensional modeling is performed by sequentially laminating a resin for each cross section of an object to be modeled cut on a plurality of parallel planes, in order to generate a modeled article as a three-dimensional model of the object to be modeled. Such a three-dimensional molded article can be used, for example, for the purpose of prototyping parts and manufacturing products. As a method of the three-dimensional molding, a fused deposition method, in which a resin is melted and deposited, can be particularly used.

The method for producing the three-dimensional molded article according to the third invention of the present disclosure can be performed in accordance with the known fused deposition method, except that the above-described carbon-fiber-reinforced thermoplastic resin strand according to the third invention of the present disclosure is used.

Specifically, for example, the three-dimensional molded article can be produced by supplying the above-described carbon-fiber-reinforced thermoplastic resin strand according to the third invention of the present disclosure to a discharge head of a fused deposition three-dimensional molding apparatus; by melting the carbon-fiber-reinforced thermoplastic resin strand in the discharge head; by discharging the melted carbon-fiber-reinforced thermoplastic resin strand from the discharge head to deposit it in the form of a layer; and by repeating the layer deposition procedure.

(The fourth present invention)

The fourth invention of the present disclosure relates to the carbon-fiber-reinforced thermoplastic resin pellet comprising a regenerated carbon fiber which is produced using a waste material of a carbon-fiber-reinforced resin molded article, etc.

The carbon-fiber-reinforced thermoplastic resin pellet according to the fourth invention of the present disclosure comprises a regenerated carbon fiber and a thermoplastic resin, wherein the regenerated carbon fiber is characterized in that:

it has the single fiber tensile strength of 3.0 GPa or higher and the Weibull shape parameter of 6.0 or higher; and it comprises a residual carbon component and the content of the residual carbon component is more than 0% by weight and 5.0% by weight or less with respect to the regenerated carbon fiber.

In general, the carbon-fiber-reinforced thermoplastic resin pellet is obtained by melt-kneading a thermoplastic resin and a carbon fiber in a twin-screw extruder, etc.; however, since high shear stress is applied during the kneading process, the carbon fibers are sometimes crushed in the extruder. If the average fiber length of the carbon fibers in the obtained pellets is less than 300 $\mu$m, the effect of reinforcing the mechanical properties may be reduced.

Without wishing to be bound by theory, it is considered that since the regenerated carbon fiber according to the fourth invention of the present disclosure has high Weibull shape parameter with regard to the single fiber tensile strength, the variation in the tensile strength is reduced and the percentage of single fibers having a low tensile strength is reduced as compared with an unused common carbon fiber having an equivalent tensile strength, and as a result the breakage of the regenerated carbon fiber is relatively suppressed.

Furthermore, in general, when the variation in the tensile strength of carbon fibers introduced into the extruder is large, fibers having low strength are more finely crushed, and as a result the proportion of the carbon fibers having 300 $\mu$m or less increase in the pellet. On the other hand, as described above, it is considered that since the regenerated carbon fiber of the present invention has high Weibull shape parameter, the variation in tensile strength is reduced and the proportion of fibers crushed to the size of 300 $\mu$m or less is reduced, and as a result, the effect of reinforcing the mechanical properties increases.

In a particular embodiment, a carbon fiber aggregate can be used as a source of the regenerated carbon fiber in the production of the pellet according to the fourth invention of the present disclosure. The carbon fiber aggregate includes a regenerated carbon fiber and a binder. With regard to the production method, mention may be made of, for example, the descriptions in JP patent 3452363 and JP2020-180421A.

In the following, the invention according to the fourth invention of the present disclosure will be described in more detail.

Regenerated carbon fiber

With regard to the regenerated carbon fiber, reference may be made to the above description regarding the regenerated carbon fiber according to the second present invention.

Residual average fiber length

Preferably, the residual average fiber length of the regenerated carbon fiber in the carbon-fiber-reinforced thermoplastic resin pellet (i.e., the average fiber length of the regenerated carbon fibers present in the pellet) is 300 $\mu$m or more. The residual average fiber length of the regenerated carbon fiber is more preferably 320 $\mu$m or more, 330 $\mu$m or more, or 340 $\mu$m or more. The upper limit of the residual average fiber length of the regenerated carbon fiber is not particularly limited, but may be 600 $\mu$m or less, or 500 $\mu$m or less.

The residual average fiber length of the regenerated carbon fiber in the carbon-fiber-reinforced thermoplastic resin pellet can be determined by removing a matrix resin in the pellet by a sulfuric acid decomposition method, performing filtration, measuring the fiber length of 300 or more of single fibers using a microscope, and then calculating a number average value.

Occurrence frequency of single fibers having length of 300 $\mu$m or less

With regard to the regenerated carbon fiber in the carbon-fiber-reinforced thermoplastic resin pellet, occurrence frequency of single fibers of 300 $\mu$m or less (in particular less than 300 $\mu$m) is preferably 40% or less. The occurrence frequency of single fibers of 300 $\mu$m or less (in particular less than 300 $\mu$m) is particularly preferably 39% or less, 38% or less, 37% or less, or 36% or less. The lower limit of the occurrence frequency of single fibers of 300 $\mu$m or less is not particularly limited, but may be, for example, 1% or more, or 10% or more.

The occurrence frequency of single fibers of 300 $\mu$m or less (or less than 300 $\mu$m) can be determined by measuring the fiber length of single fibers in the same manner as the measurement of the residual average fiber length described above, and calculating the proportion of the number of fibers of 300 μm or less (or less than 300 μm).

Single fiber tensile strength, etc.

With regard to the single fiber tensile strength, the Weibull shape parameter, and the carbon fiber component in the regenerated carbon fiber, respectively, reference may be made to the corresponding descriptions regarding the second present invention described above.

Residual carbon component

The residual carbon component comprised in the regenerated carbon fiber is in particular a residual carbon which is derived from a resin contained in a carbon-fiber-containing plastic product used as a raw material in the production of the regenerated carbon fiber.

Preferably, the residual carbon component is 4.0% by weight or less, 3.0% by weight or less, or 2.0% by weight or less, with respect to the regenerated carbon fiber. It is preferable that the residual carbon component is reduced as much as possible, but may be 0.01% by weight or more, 0.1% by weight or more, 0.2% by weight or more, 0.4% by weight or more, 0.6% by weight or more, 0.8% by weight or more, 1.0% by weight or more, or 1.2% by weight or more, with respect to the carbon fiber.

The content of the residual carbon component in the regenerated carbon fiber can be measured by thermogravimetric analysis (TGA method) as described above with respect to the first present invention.

Thermoplastic resin

Examples of the thermoplastic resin contained in the carbon-fiber-reinforced thermoplastic resin pellet according to the fourth invention of the present disclosure include polyolefin resins (for example, polypropylene resins and polyethylene resins), polyester resins (for example, polyethylene terephthalate resins, polybutylene terephthalate resins, and polylactic acid resins), polyamide resins, polyether ketone resins, polycarbonate resins, phenoxy resins, and polyphenylenesulfide resins. The thermoplastic resin may be only one type or may be a mixture of two or more types of thermoplastic resins.

Pellet

The carbon-fiber-reinforced thermoplastic resin pellet according to the fourth invention of the present disclosure comprises a regenerated carbon fiber and a thermoplastic resin.

The shape of the carbon-fiber reinforced thermoplastic resin pellet according to the fourth invention of the present disclosure is not particularly limited, but the longitudinal length of the pellet is preferably 3 mm or more and 10 mm or less. Particularly preferably, it may be 5 mm or less.

Content of regenerated carbon fiber

The content of the regenerated carbon fiber in the carbon-fiber-reinforced thermoplastic resin pellet according to the fourth invention of the present disclosure is preferably less than 50% by weight, 40% by weight or less, or 30% by weight or less, and/or 5% by weight or more, 7% by weight or more, or 8% by weight or more, with respect to the carbon-fiber-reinforced thermoplastic resin pellet.

If the content of the regenerated carbon fiber is less than 50% by weight with respect to the carbon-fiber-reinforced thermoplastic resin pellet, the carbon fibers can be dispersed particularly uniformly in the pellet. Further, when the content of the regenerated carbon fiber is 5% by weight or more with respect to the carbon-fiber-reinforced thermoplastic resin pellet, it is possible to obtain a particularly good effect of the pellet for reinforcing mechanical properties.

Method for producing pellet

A method for producing the carbon-fiber-reinforced thermoplastic resin pellet according to the fourth invention of the present disclosure is not particularly limited, but can be obtained, for example, by a production method comprising:

providing a regenerated carbon fiber,
providing a thermoplastic resin, and
kneading the regenerated carbon fiber with the melted thermoplastic resin, wherein,
the regenerated carbon fiber has the single fiber tensile strength of 3.0 GPa or higher and the Weibull shape parameter of 6.0 or higher, and
the regenerated carbon fiber contains a residual carbon component and the content of the residual carbon component is more than 0% by weight and 5.0% by weight or less with respect to the regenerated carbon fiber.

With regard to the regenerated carbon fiber and the thermoplastic resin used in the production of the carbon-fiber-reinforced thermoplastic resin pellet according to the fourth invention of the present disclosure, reference may be made to the above description regarding the carbon-fiber-reinforced thermoplastic resin pellet according to the fourth invention of the present disclosure. Further, methods for kneading are not particularly limited, and can be performed by a known method.

In one exemplary embodiment for producing a carbon-fiber-reinforced thermoplastic resin pellet according to the fourth invention of the present disclosure, a thermoplastic resin serving as a base resin is supplied through a main feeder of a twin-screw kneading extruder; a regenerated carbon fiber is supplied from a twin-screw feeder into the resin which has been kneaded and melted in the extruder; and the extruded kneaded material is cooled in a water-cooled bath and then cut to obtain a carbon-fiber-reinforced thermoplastic resin pellet.

Molded article

The carbon-fiber-reinforced thermoplastic resin pellet according to the fourth invention of the present disclosure can be molded using an extruder, etc., in order to produce a molded article. The molded article formed from the pellet according to the present disclosure exhibits good physical properties, in particular good mechanical properties.

Tensile strength

Preferably, in accordance with ISO527, the molded article produced in the manner described below exhibits the tensile strength of 90 MPa or higher, particularly preferably of 92 MPa to 110 MPa, or 95 MPa to 100 MPa.

Flexural strength

Preferably, in accordance with ISO178, the molded article produced in the manner described below exhibits the flexural strength of 140 MPa or higher, particularly preferably of 140 MPa to 160 MPa, 140 MPa to 150 MPa, or 140 MPa to 145 MPa.

Flexural modulus

Preferably, in accordance with ISO178, the molded article produced in the manner described below exhibits the flexural modulus of 7100 MPa or higher, particularly preferably 7100 MPa to 8000 MPa, 7100 MPa to 7500 MPa, or 7100 MPa to 7400 MPa.

The molded article used for evaluating the tensile strength, flexural strength, and flexural modulus can be prepared by forming a dumbbell piece having 170 mm length $\times$ 10 mm width $\times$ 4 mm thickness from the pellet to be evaluated, by using an injection molding machine (cylinder temperature: 300 °C, mold temperature: 100 °C).

EXAMPLES

In the following, the inventions according to the present disclosure will be described in more detail by way of illustrative examples. The present inventions are not limited to the following examples.

(The first present invention)

Examples 1-1 to 1-3 according to the first present invention and Comparative Example 1-1

In Examples 1-1 to 1-3 according to the first present invention and Comparative Example 1-1, a carbon-fiber-reinforced plastic (CFRP) plate as a plastic-containing material was subjected to a heat treatment, and plastic decomposition efficiency was evaluated.

Example 1-1

Example 1-1 was performed as follows.

Material provision and arrangement

Used as a semiconductor material is a carrier having a honeycomb structure on the surface of which chromium oxide ($Cr_2O_3$, 99% or more of purity, manufactured by Junsei Chemical Co., LTD.) was applied. The carrier with the honeycomb structure was 13 cell /25 mm.

A CFRP plate was used as the plastic-containing material, wherein the content ratio of an epoxy resin in the CFRP plate was 41% by weight.

The internal volume of the furnace was 9 L. Inside the furnace, the CFRP plate was placed on the carrier which carries chromium oxide as the semiconductor material. The carrier and the CFRP plate were placed in contact with each other.

The surface temperature of the CFRP plate was measured by a sensor located within 5 mm from the surface of the CFRP plate.

Heat treatment

The internal temperature of the furnace was controlled via the output of a heater in the furnace, in order to increase the internal temperature of the furnace.

Before the surface temperature of the CFRP plate reaching 300°C, a mixed gas of air and nitrogen gas having an oxygen concentration of 6% by volume was introduced into the furnace. The introduction of the mixed gas into the furnace was performed by sucking the gas from a suction port provided in an upper portion of the furnace at a gas introduction rate of 70 L/min and allowing the mixed gas to flow in from a gas supply part provided in a lower portion of the furnace. The oxygen concentration in the furnace was measured by an oxygen monitor.

A heat treatment was performed for 30 minutes under the atmosphere which was controlled to an oxygen concentration of 6% by volume through the introduction of the mixed gas. During the heat treatment, the output of the heater in the furnace was adjusted in order to increase the surface temperature of the CFRP plate to a first surface temperature of 376°C.

Evaluation

The evaluation of plastic decomposition efficiency in the method according to Example 1-1 was performed by calculating the weight reduction ratio (wt%) from the difference between the weight of the CFRP plate prior to the heat treatment and the weight of the CFRP plate after the heat treatment. The result is shown in Table 1.

Example 1-2

In Example 1-2, a heat treatment and evaluation were performed in the same manner as in Example 1-1, except that the carrier and the CFRP plate were arranged in the furnace so that they are spaced apart from each other by 30 mm and that the surface temperature of the CFRP plate was increased to 377°C during the heating treatment. The result is shown in Table 1.

Example 1-3

In Example 1-3, a heat treatment and evaluation were performed in the same manner as in Example 1-1, except that the heat treatment was performed for 60 minutes and that the surface temperature of the CFRP plate was increased to 371°C during the heat treatment. The result is shown in Table 1.

Comparative Example 1-1 (Comp.Ex.1-1)

In Comparative Example 1-1, a heat treatment and evaluation were performed in the same manner as in Example 1-1, except that a semiconductor material was not used and that the surface temperature of the CFRP plate was increased to 370°C during the heat treatment. The result is shown in Table 1.

[Table 1]

Table 1

|  | Semiconductor material | Distance between semiconductor material and CFRP plate (mm) | Oxygen Concentration (Vol %) | Surface temperature (°C) | Treatment time (min) | Weight reduction rate (wt%) |
|---|---|---|---|---|---|---|
| Example 1 - 1 | yes | 0 (contact) | 6 | 300→376 | 30 | 15.0 |
| Example 1 - 2 | yes | 30 | 6 | 300→377 | 30 | 13.7 |
| Example 1 - 3 | yes | 0 (contact) | 6 | 300→371 | 60 | 16.3 |
| Comp.Ex. 1 - 1 | no | - | 6 | 300→370 | 30 | 11.1 |

As can be seen in Table 1, Examples 1-1 to 1-3, which were heated to the surface temperature of 371°C to 377°C in the presence of a semiconductor material and under the introduction of the low oxygen concentration gas having the oxygen concentration of 6% by volume, exhibited higher decomposition efficiency of the plastic-containing material, as compared with Comparative Example 1-1 in which a semiconductor material was not used.

Incidentally, in Example 1-3, although the treatment time was extended to 60 minutes, the increase in the weight loss rate was limited as compared with Example 1-1 in which the treatment time was 30 minutes. As a reason for this, it is considered that the decomposition efficiency was reduced because the sample surface was covered with carbides during the heat treatment.

Example 1-4 according to the first present invention and Comparative Example 1-2

Example 1-4

In Example 1-4, a treatment and evaluation were performed in the same manner as in Example 1-1, except that the heat treatment was performed for 60 minutes under the condition of 500°C surface temperature. The result is shown in Table 2 below.

Comparative Example 1-2 (Comp.Ex.1-2)

In Comparative Example 1-2, a treatment and evaluation were performed in the same manner as in Example 1-4, except that a semiconductor material was not used. The result is shown in Table 2 below.

[Table 2]

Table 2

|  | Semiconductor material | Distance between semiconductor material and CFRP plate (mm) | Oxygen Concentration (Vol %) | Surface temperature (°C) | Treatment time (min) | Weight reduction rate (wt%) |
|---|---|---|---|---|---|---|
| Example 1 -4 | yes | 0 (contact) | 6 | 500 | 60 | 38.3 |
| Comp.Ex. 1 -2 | no | - | 6 | 500 | 60 | 32.3 |

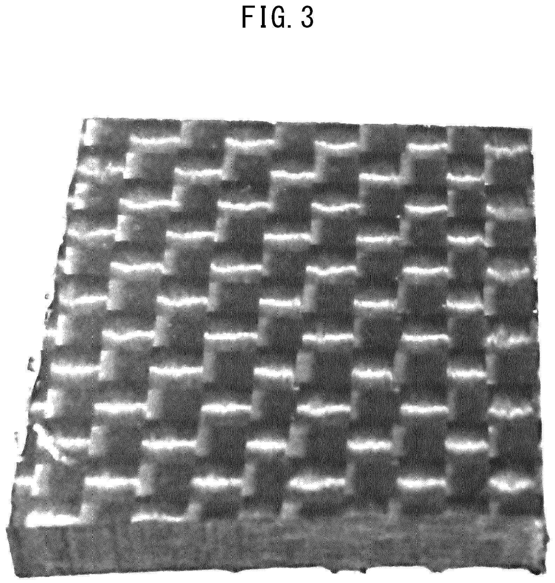

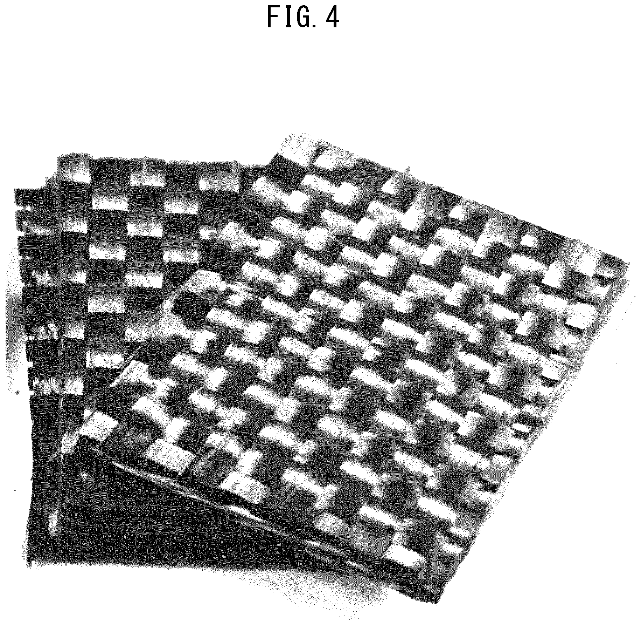

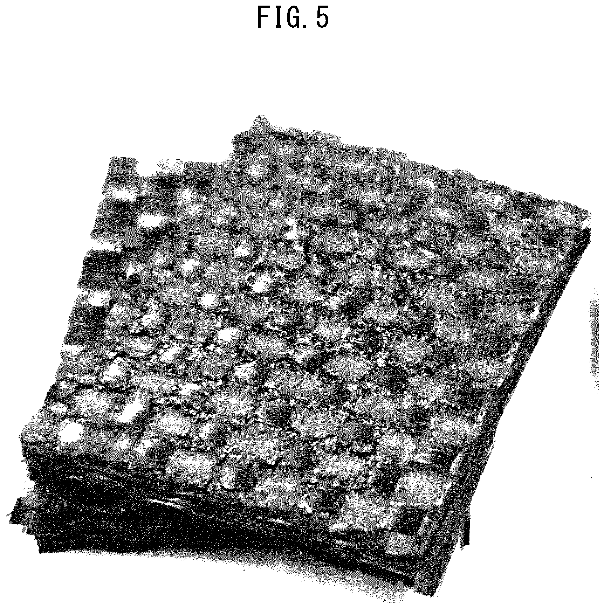

Photographs of the samples after the treatment according to Example 1-4 and Comparative Example 1-2 are shown in FIG. 4 and FIG. 5, respectively. Further, a photograph of the sample before the treatment is shown in FIG. 3.

As can be seen in Table 2, Example 1-4, in which the heat treatment was performed in the presence of a semiconductor material under the introduction of a low oxygen concentration gas having an oxygen concentration of 6% by volume, showed high decomposition efficiency of plastic as compared with Comparative Example 1-2 in which the heat treatment was performed under the introduction of a low oxygen concentration gas having an oxygen concentration of 6% by volume without a semiconductor material.

Further, as can be seen in FIG. 5, on the surface of the sample after the treatment according to Comparative Example 1-2, a residual carbon derived from a plastic was adhered in the form of a lump. On the other hand, as can be seen in FIG. 4, in the treated sample according to Example 1-4, adhesion of such a residual carbon was not observed, and it had a relatively smooth and highly uniform surface as in the surface of a pre-treatment sample shown in FIG. 3.

Examples 1-5 to 1-9 (Ex. 1-5 to 1-9) according to the first present invention

In Examples 1-5 to 1-9, CFRP plates or pressure vessels as the plastic-containing materials were subjected to a two-stage heating. Then, the decomposition efficiency was evaluated, and the physical properties of the carbon fiber (the carbon fiber material) obtained by the heat treatment were evaluated.

Example 1-5

Example 1-5 was performed as follows.

Material provision and arrangement

Used as a semiconductor material is a carrier having a honeycomb structure on the surface of which chromium oxide ($Cr_2O_3$, 99% or more of purity, manufactured by Junsei Chemical Co., LTD.) was applied. The carrier having the honeycomb structure was 13 cell /25mm.

A CFRP plate was used as a plastic-containing material, wherein the content ratio of an epoxy resin in the CFRP plate was 41% by weight. The physical properties of the carbon fiber contained in the CFRP plate before the treatment are shown in Table 3 as Reference Example 1-1 (Ref.Ex.1-1).

The internal volume of the furnace was 0.0525 $m^3$. The CFRP plate was placed inside the furnace on the carrier which carried chromium oxide as the semiconducting material. The carrier and the CFRP plate were placed in contact with each other.

The surface temperature of the CFRP plate was measured by a sensor located within 5 mm from the surface of the CFRP plate.

Heat treatment

The internal temperature of the furnace was controlled via the output of a heater in the furnace, in order to increase the internal temperature of the furnace. Then, before the surface temperature of the CFRP plate reaches 300°C, a mixed gas of air and nitrogen gas having an oxygen concentration of 8% by volume was introduced into the furnace. The mixed gas was introduced into the furnace by sucking the mixed gas at a gas introduction rate of 190 L/min and allowing the mixed gas to flow in from a gas supply part provided in the furnace.

In Example 1-5, as well as in Example 1-6 and Comparative Example 1-4 described below, the oxygen concentration in the furnace was measured by an oxygen monitor installed in the furnace. For Examples 1-7 to 1-9, the oxygen concentration in the furnace was calculated based on the furnace internal volume and the gas introduction rate.

The generation of decomposition gas was detected when the surface temperature of the CFRP plate was 300°C.

A heat treatment was performed for 120 minutes in the atmosphere controlled to an oxygen concentration of 8% by volume through the introduction of the mixed gas. During the heat treatment, the output of the heater in the furnace was adjusted in order to increase the surface temperature of the CFRP plate to a first surface temperature of 450°C.

Secondary heat treatment

Then, while the gas suction pressure was maintained, the supply of the nitrogen gas was stopped, so that only the air was supplied; after it was confirmed that the oxygen concentration in the furnace reached 10% by volume or more, further heat treatment was performed. During the heat treatment for 260 minutes, the surface temperature of the CFRP plate was increased to 500°C. Incidentally, the average oxygen concentration over the period of 260 minutes was 14% by volume, and the maximum oxygen concentration was 18% by volume.

In Examples 1-5, the weight of the treated CFRP plate was 0.8 kg. The throughput with respect to the furnace internal volume was 15.2 kg/$m^3$.

Residual carbon content

The amount of a plastic-derived residual carbon in the carbon fiber (the regenerated carbon fiber) recovered after the heat treatment was determined by thermogravimetric analysis. The value of the residual carbon amount in Table 3 below represents the amount (wt%) of the residual carbon relative to the carbon fiber.

Thermogravimetric analysis was performed as follows:

(i) For 1 to 4 mg of sample fragments obtained by pulverizing the recovered carbon fiber, thermogravimetric analysis was performed for a period of 300 minutes in a thermogravimetric analyzer under conditions of 0.2 L/min of air supply rate, 5°C/min of heating rate, and 1/6 s of recording rate, wherein the thermogravimetric analysis consisted of the steps of raising the temperature from room temperature to 100°C, holding the temperature at 100°C for 30 minutes, raising the temperature from 100°C to 400°C, and holding the temperature at 400°C,

(ii) in a graph obtained by plotting weight loss rates against time, the inflection point of the slope was identified, and the amount of a residual carbon was calculated by subtracting the weight loss rate during the holding period at 100°C from the value of the weight loss rate at the inflection point.

Further, for the carbon fiber recovered after the heat treatment, the diameter of the single fiber and the single fiber tensile strength were measured, and the Weibull shape parameter was calculated.

Single fiber tensile strength

The single fiber tensile strength was measured according to JIS R7606 as follows:

at least 30 single fibers were collected from a fiber bundle,
diameters of the single fibers were measured in a side-view image of the single fibers captured by a digital microscope, in order to calculate the cross-sectional area,
the sampled single fibers were fixed to a perforated mount paper using an adhesive,
the mount paper on which the single fiber was fixed was attached to a tensile tester, and a tensile test was performed at test length 10 mm and strain rate 1 mm/min, in order to measure the tensile fracture stress,
the tensile strength was calculated from the cross-sectional area and the tensile fracture stress of the single fiber, and the average tensile strength of at least 30 single fibers was determined as the single fiber tensile strength.

Weibull shape parameter

The Weibull shape parameter was calculated according to the following formula:

$$\mathrm{lnln}\{1/(1-F)\}=m\times\mathrm{ln}\sigma+C$$

wherein F is the fracture probability determined by the symmetric sample cumulative distribution method, $\sigma$ is the single fiber tensile strength (MPa), m is the Weibull shape parameter, and C is the constant.

The Weibull plot of lnln {1/(1-F)} and ln$\sigma$ was performed, and the Weibull shape parameter m was obtained from the first order approximated slope.

Evaluation results for Example 1-5 are shown in Table 3. The single fiber diameter is an average of the diameters of at least 30 single fibers measured as described above.

Example 1-6

A treatment was carried out in the same manner as in Example 1-5, except that a pressure vessel was used as a plastic-containing material, that the mixed gas was sucked at a gas introduction rate of 127 L/min, and that the oxygen concentration, the surface temperature, and the duration of the heat treatment were set as shown in Table 3 below.

The pressure vessel treated in Example 1-6 had an aluminum liner and 44% by weight of FRP (fiber-reinforced plastic), and the FRP contained 31% by weight of reinforcing fiber and 13% by weight of epoxy resin. The reinforcing fibers were composed mainly of carbon fibers and contained a small amount of glass fibers. The capacity of the pressure vessel was 2.0 L.

The amount of the FRP treated in Example 1-6 was 0.47 kg. The throughput with respect to the furnace internal volume was 9.0 kg/m$^3$.

The evaluation results of the plastic decomposition efficiency and the evaluation results of the physical properties of the recovered carbon fiber for Example 1-6 are shown in Table 3. Incidentally, the average oxygen concentration over the course of 180 minutes of the secondary heat treatment was 18% by volume and the maximum oxygen concentration was 20% by volume.

The physical properties of a carbon fiber contained in the pressure vessel prior to the treatment are shown in Table 3 as Reference Example 1-2 (Ref.Ex. 1-2).

Example 1-7

A heat treatment was carried out in the same manner as in Example 1-5, except that the internal volume of the furnace was 0.1435 m$^3$, that a mixed gas of superheated steam and air was introduced into the furnace at a gas introduction rate of 29 L/min, and that the surface temperature and the duration of the heat treatment were set as shown in Table 3 below.

The internal temperature of the furnace and the surface temperature of the sample were controlled via the heater output of the furnace and the temperature of the superheated steam.

In Example 1-7, the weight of the CFRP plate treated was 1.0 kg. The throughput with respect to the furnace internal volume was 7.0 kg/m$^3$.

The evaluation results of the plastic decomposition efficiency and the evaluation results of the physical properties of the recovered carbon fiber for Example 1-7 are shown in Table 3. Incidentally, in the secondary heat treatment, only air was pushed into the furnace at 29 L/min.

Example 1-8

A treatment was carried out in the same manner as in Example 1-7, except that the pressure vessel was used as a plastic-containing material, and the surface temperature and the duration of the heat treatment were set as shown in Table 3 below.

The pressure vessel used in Example 1-8 was the same as the pressure vessel used in Example 1-6.

The amount of the FRP treated in Examples 1-8 was 0.47 kg. The throughput with respect to the furnace internal volume was 3.3 kg/m$^3$.

The evaluation results of the plastic decomposition efficiency and the evaluation results of the physical properties of the recovered carbon fiber for Example 1-8 are shown in Table 3. In the secondary heat treatment, only air was pushed into the furnace at a rate of 29 L/min.

Example 1-9

A treatment was carried out in the same manner as in Example 1-7, except that the internal volume of the furnace was 0.049 m$^3$, that a mixed gas of superheated steam and air was introduced into the furnace at a gas introduction rate of 25 L/min, and that the surface temperature and the duration of the heating treatment were set as shown in Table 3 below.

In Example 1-9, the treated CFRP plate had an epoxy resin ratio of 38%. The throughput with respect to the furnace internal volume was 1.6 kg/m$^3$.

The evaluation results of the plastic decomposition efficiency and the evaluation results of the physical properties of the recovered carbon fiber for Example 1-9 are shown in Table 3. Incidentally, in the secondary heat treatment, the amount of air was increased while the superheated steam was continuously supplied, and a gas having an oxygen concentration of 11% by volume was pushed into the furnace at 38 L/min.

The physical properties of a carbon fiber contained in the above-described CFRP plate according to Example 1-9 prior to the treatment are shown in Table 3 as Reference Example 1-3 (Ref.Ex.1-3).

Comparative example 1-3 (Comp.Ex.1-3) with regard to the first present invention

In Comparative Example 1-3, the material was provided and arranged in the same manner as in Example 1-5, and thereafter, the internal temperature of the furnace was increased without adjusting the oxygen concentration of the atmosphere in the furnace.

As a consequence, while the heater output level was maintained at the level at which the surface temperature of the CFRP plate reached 300°C, excessive self-heating occurred, and the temperature of the surface of the CFRP plate reached 485°C. The results are shown in Table 3.

In Comparative Example 1-3, the treated CFRP plate was 0.8 kg. The throughput with respect to the furnace internal volume was 15.2 kg/m$^3$.

Comparative Example 1-4 (Comp.Ex.1-4) with regard to the first present invention

A treatment was performed in the same manner as in Example 1-6, except that a semiconductor material was not used.

The amount of the treated FRP in Comparative Example 1-4 was 0.47kg. The throughput with respect to the furnace internal volume was 9.0 kg/m$^3$.

With regard to Comparative Example 1-4, the evaluation result of the physical properties of the recovered carbon fiber is shown in Table 3. In the secondary heat treatment, the average oxygen concentration over the period of 180 minutes was 18% by volume and the maximum oxygen concentration was 20% by volume.

[Table 3]

Table 3

| No. | Plastic-containing material | Semiconductor material | Introduction of low oxygen concentration gas | | | Primary heat treatment | | Secondary heat treatment | | Decomposition efficiency | Physical properties | | |
|---|---|---|---|---|---|---|---|---|---|---|---|---|---|
| | | | Oxygen conc. (vol%) | Gas composition | Gas introduction rate (L/min) | Oxygen cone. In furnace (*2) (vol %) | Surface temperature /time | Oxygen cone. in furnace (vol %) | Surface temperature /time | residual carbon amount (wt %) | Single fiber diameter ($\mu$m) | Single fiber tensile strength (GPa) | Weibull shape parameter |
| Ex. 1-5 | CFRP plate | yes | 8 | Nitrogen /Air | 190 | 8 | 300°C→450°C /120min | ≧ 10 | 450°C→500°C /260min | 0.26 | 7.2 | 3.5 | 7.6 |
| Ex. 1-6 | Pressure vessel | yes | 6 | Nitrogen /Air | 127 | 6 | 300°C→480°C /150min | ≧ 10 | 480°C /180min | 0.21 | 7.4 | 3.7 | 9.2 |
| Ex. 1-7 | CFRP plate | yes | 6 | superheated steam /Air | 29 | 6 | 300°C→500°C /170min | ≧ 10 | 500°C /120min | 1.50 | 7.1 | 3.5 | 7.0 |
| Ex. 1-8 | Pressure vessel | yes | 6 | superheated steam /Air | 29 | 6 | 300°C→470°C /105min | ≧ 10 ≧ 10 | 470°C /180min | 2.60 | 7.3 | 3.5 | 6.9 |
| Ex. 1-9 | CFRP plate | yes | 6 | superheated steam /Air | 25 | 6 | 300°C→500°C /20min | ≧ 10 | 500°C /180min | 1.89 | 6.7 | 5.0 | 8.5 |
| Comp. 1-3 Ex. | CFRP plate | yes | 21 | - | - | 21 | (*1) | - | - | - | - | | - |
| Comp. Ex. 1-4 | Pressure vessel | no | 6 | Nitrogen /Air | 127 | 6 | 300°C→480°C /150min | ≧ 10 | 480°C /180min | - | 7.3 | 3.2 | 5.6 |
| Ref. Ex. 1-1 | CFRP plate | - | - | - | - | - | - | - | - | - | 7.4 | 3.7 | 4.6 |
| Ref. Ex. 1-2 | Pressure vessel | - | - | - | - | - | - | - | - | - | 7.6 | 4.1 | 5.0 |
| Ref. Ex. 1-3 | CFRP plate | - | - | - | - | - | - | - | - | - | 6.7 | 5.4 | 4.9 |

(*1) Decomposed gas was detected after the temperature was raised to 300 °C, but due to the self heating, the temperature reached 485°C without further raising the heater output.
(*2) With regard to Examples 1-7 to 1-9, oxygen concentrations (oxygen conc.) in the furnace described are based on the internal volume of the furnace and the gas introduction rate.

In Examples 1-5 to 1-9, a low oxygen concentration gas having an oxygen concentration of 6 to 8% by volume was introduced, a primary heat treatment was performed in the presence of a semiconductor material, and a secondary heat treatment was further performed under an increased oxygen concentration. As can be seen in Table 3, in these Examples, the residue carbon content (the content of the residual carbon component) was low and excellent plastic decomposition efficiency was observed.

Further, in Comparative Example 1-3 in which the oxygen concentration was not controlled, excessive self-heating occurred. On the other hand, excessive self-heating was not observed in Examples 1-5 to 1-9 in which a low oxygen concentration gas having an oxygen concentration of 6 to 8% by volume was introduced into the furnace. It is considered that in Comparative Example 1-3, since the decomposition treatment was initiated without reducing the oxygen concentration in advance, the oxygen concentration became excessive, and as a result, it was not possible to suitably control the decomposition temperature in the presence of a semiconductor material.

Furthermore, the carbon fibers recovered in Examples 1-5 to 1-9 had the single fiber diameter and single fiber tensile strength comparable to the carbon fiber prior to the treatment (Reference Examples 1-1 to 1-3), and had higher Weibull shape parameter with regard to the single fiber tensile strength. Therefore, in Examples 1-5 to 1-9, the recovered carbon fiber had excellent physical properties than a carbon fiber before being used for the production of the carbon-fiber-reinforced plastic.

Furthermore, the carbon fiber recovered in Example 1-6 which was subjected to a heat treatment with a semiconductor material exhibited superior quality, in particular in terms of the single fiber tensile strength and Weibull shape parameter, as compared with the carbon fiber recovered in Comparative Examples 1-4 which was subjected to a heat treatment without a semiconductor material.

Example 2-1 according to the second present invention

Preparation of material

Regenerated carbon fiber

In Example 2-1, as a regenerated carbon fiber, a regenerated carbon fiber having the average length of 50 mm, the average single fiber diameter of 6.7 $\mu$m, the single fiber tensile strength of 4.7 GPa, the Weibull shape parameter of 7.0, and the residual carbon content of 0.6% by weight was used, wherein the regenerated carbon fiber was regenerated using a CFRP as a raw material by the thermal activation of semiconductors method according to the method of the first invention of the present disclosure.

Single fiber tensile strength

The single fiber tensile strength was measured in accordance with JIS R7606 in the same manner as in Example 1-5 described above.

Weibull shape parameter

The Weibull shape parameter was calculated in the same manner as in Example 1-5 described above.

Residual carbon content

The amount of the residual carbon component in the regenerated carbon fiber was determined by thermogravimetric analysis (TGA method) as follows:

(i) For 4 mg of sample fragments obtained by pulverizing the regenerated carbon fiber, thermogravimetric analysis was performed for the period of 600 minutes in a thermogravimetric analyzer under conditions of 0.2 L/min of air supply rate, 5°C/min of heating rate, and 1/6 s of recording rate, wherein the thermogravimetric analysis consisted of the steps of raising the temperature from room temperature to 100°C, holding the temperature at 100°C for 30 minutes, raising the temperature from 100°C to 400°C, and holding the temperature at 400°C for 480 minutes.
(ii) in a graph obtained by plotting weight loss rates against time, the inflection point of the slope was identified, and the amount of a residual carbon was calculated by subtracting the weight loss rate during the holding at 100°C from the value of the weight loss rate at the inflection point.

The above regenerated carbon fiber was immersed in an aqueous dispersion of an epoxy-based resin, removed from the dispersion, and dried in a dryer, and then the regenerated carbon fiber was coated with 2% by weight of an epoxy resin as a binder with a thermoplastic resin.

Thermoplastic resin fiber

In Example 2-1, as a thermoplastic resin fiber, polyamide 66 resin fiber having an average length of 38 mm (PA66 resin fiber (1401-1.3T-38 E9, manufactured by Toray Industries, Inc.), the single fiber fineness of 1.3 dtex, the number of crimps of 17 /25 mm, and the melting point of 265°C) was used.

Production of blended spun yarn

By blending the above regenerated carbon fiber on which a binder was applied and the above PA66 resin fiber at a ratio of 80% by weight and 20% by weight, and then by performing a spinning process having steps of carding, drawing, and roving, it was possible to obtain a continuous blended spun yarn (the blended spun yarn according to Example 2-1) of 0.86 g/m. Incidentally, in the roving step, 200 times /m of twists were applied.

Production of carbon-fiber-reinforced thermoplastic resin pellet

Next, the blended spun yarn thus obtained was coated with polyamide 6 (Akulon (registered trademark) F-X9182, manufactured by DSM, the melting point of 220°C) using a cross-head die for electric wire coating having an outlet diameter of 3 mm, and it was cut into a length of 3 mm, in order to obtain a core-sheath type pellet suitable for injection molding (carbon-fiber-reinforced thermoplastic resin pellet according to Example 2-1), in which the content of the carbon fiber was 17% by mass (463 parts by mass of polyamide 6 per 100 parts by mass of carbon fiber), the diameter was 2.6 mm, and the cut length was 3 mm.

Evaluation of injection molding

Using the obtained carbon-fiber-reinforced thermoplastic resin pellet as a raw material, an injection molding was carried out by using a 110ton electric injection molding machine (Nippon Steel Works, Ltd., J110AD) at a cylinder-temperature of C1/C2/C3/C4/N=265°C/270°C/280°C/280°C/280°C (wherein C1 to C4 were cavities, and N was a nozzle) and with 40 seconds of molding cycle, in order to obtain a dumbbell piece for tensile test having the thickness of 4 mm (the molded article according to Example 2-1). In the obtained molded article, agglomerations of the fibrous material or bubbles due to poor dispersion were not observed, and the appearance was good.

The tensile strength was measured in accordance with ISO 527 (JIS K7161) using the obtained dumbbell as the test piece. The tensile strength was 200 MPa, indicating that the test piece had excellent mechanical properties.

The average fiber length of the regenerated carbon fibers contained in the molded article was 0.33 mm.

Evaluation of the average fiber length of the regenerated carbon fibers in the molded article was performed as follows:

a test piece of 20 mm×10 mm was cut out from the obtained molded article, and a resin component was burnt out by a heat treatment at 550°C for 1.5 hours in an oxygen atmosphere. The remaining carbon fiber was put into water and sufficiently stirred by ultrasonic vibration. The stirred dispersion was randomly collected by a weighing spoon in order to obtain a sample for evaluation Then, by using an imaging analysis apparatus Luzex AP manufactured by NIRECO Corporation measurement of the length was performed for 3000 fibers, and the average length was calculated, and the average fiber length of the carbon fibers in the molded article was determined.

The results according to Example 2-1 are shown in Table 4 below.

Comparative Example 2-1 (Comp.Ex.2-1) with regard to the second present invention

The production of a blended spun yarn was attempted in the same manner as in Example 2-1, except that the regenerated carbon fiber having a residual carbon content of 7.1% by weight was used. Incidentally, since the single fibers were firmly bound by the residual carbon, it was not possible to isolate single fibers, and therefore it was not possible to evaluate the single fiber tensile strength and Weibull shape parameter of the regenerated carbon fiber.

In Comparative Example 2-1, it was not possible to produce a continuous blended spun yarn, because the single fibers of the regenerated carbon fiber were bound to each other and were not sufficiently opened in the carding step, and because yarns fell off due to insufficient entanglement of the single fibers. The results are shown in Table 4 below.

**[Table 4]**

Table 4

| | Blended spun yarn | | | | | Pellet | | |
|---|---|---|---|---|---|---|---|---|
| | Regenerated carbon fiber | | | Thermoplastic resin fiber | (*1) | Coating Resin (Sheath) | Tensile Strength (MPa) | Average fiber length of regenerate carbon fiber in molded article (mm) |
| | Single fiber tensile strength (GPa) | Weibull shape parameter (-) | Residual Carbon (wt%) | | | | | |
| Example 2-1 | 4.7 | 7.0 | 0.6 | PA66 fiber | Good | PA6 fiber | 200 | 0.33 |
| Comp.Ex. 2-1 | - | - | 7.1 | PA66 fiber | Poor | - | - | - |
| *1: Production evaluation : Labelled as "Good" when a continuous blended spun yarn was able to be produced. Otherwise, labelled as "Poor". | | | | | | | | |

Example 3-1 according to the third present invention

Preparation of Materials

Regenerated carbon fiber

As a regenerated carbon fiber, a regenerated carbon fiber having the average length of 50 mm, the average single fiber diameter of 6.7 μm, the single fiber tensile strength of 4.7 GPa, the Weibull shape parameter of 7.0, and the residual carbon content of 0.6% by weight was used, which was regenerated using a CFRP as a raw material by the thermal activation of semiconductors method according to the method of the first invention of the present disclosure.

Single fiber tensile strength

The single fiber tensile strength was measured in accordance with JIS R7606 in the same manner as in Example 1-5 described above.

Weibull shape parameter

Weibull shape parameter was calculated in the same manner as in Example 1-5.

Residual carbon content

The residual carbon content in the regenerated carbon fiber was determined by thermogravimetric analysis (TGA method) in the same manner as in Example 2-1 described above.
The above regenerated carbon fiber was immersed in an aqueous dispersion of an epoxy-based resin, removed from the dispersion, and dried in a dryer, and then the regenerated carbon fiber was coated with 2% by weight of an epoxy-based resin as a binder with a thermoplastic resin.

Thermoplastic resin fiber

As a thermoplastic resin fiber, a polyamide 66 resin fiber having the average length of 38 mm (PA66 resin fiber (1401-1.3T-38 E9, manufactured by Toray Industries, Inc.), the single fiber fineness of 1.3 dtex, the number of crimps of 17 /25 mm, and the melting point of 265 °C) was used.

Production of blended spun yarn

By blending the regenerated carbon fiber on which a binder was applied and the PA66 resin fiber at a ratio of 80% by weight and 20% by weight, and by performing a spinning process comprising the carding, drawing, and roving steps, it was possible to produce a continuous blended spun yarn of 0.86 g/m. Incidentally, in the roving step, 200 /m twists were applied.

Production of carbon-fiber-reinforced thermoplastic resin strand

Next, the blended spun yarn thus obtained was coated with polyamide 6 (Akulon (registered trademark) F-X9182, manufactured by DSM, the melting point of 220°C) by using a cross-head die for electric wire coating having an outlet diameter of 2.3 mm, and then wound with a winder, in order to obtain a strand-shaped fiber-reinforced plastic (the carbon-fiber-reinforced thermoplastic resin strand according to Example 3-1) having a core-sheath structure with the carbon fiber content of 17% by mass (463 parts by mass of polyamide 6 per 100 parts by mass of carbon fiber) and the average diameter of 2.0 mm.

Molding with three-dimensional molding apparatus

The above-described strand-shaped fiber-reinforced plastic, which had the average diameter of 2.0 mm, was set in a fused deposition three-dimensional molding device ("BS01" manufactured by BONSAI LAB.) and subjected to a molding test at a discharging head temperature of 280°C under the following conditions:

Speed of the discharging head movement: 30 mm/ minute (at the time of discharging the resin), 130 mm/ minute (at the time of suspending the discharge).

Discharging rate (magnification): 100%
Pitch of lamination: 0.2 mm
Temperature of lamination bed: 25°C
Ambient temperature: 25°C
Relative humidity of atmosphere: 40%

During the molding, the molded object was not cooled by a fan or a blower.

(1) Evaluation of sagging:

A three-dimensional model of a bridge shape was designed by a three-dimensional CAD, wherein in this model, two cubic shapes having 10 mm in each side as bridge girders were arranged in parallel in the horizontal plane so that the center-to-center distance of the bridge girders is 50 mm, and thereon, a plate having 60 mm length, 10 mm width, and 0.2 mm thickness was crossed. A molding was performed using this model under the above conditions, in order to produce a three-dimensional molded article. The distance Z was measured between the lamination bed and a portion of the plate part of the three-dimensional molded article which was closest to the laminated bed, and the degree of sagging was calculated from the following equation:

$$\text{Sagging (mm)} = 10\text{-}Z$$

The average value of the sagging was calculated by repeating the molding three times. When the average value was 0 mm or more and less than 2mm, it was evaluated as excellent ("Very good"); when the average value was 2 mm or more and less than 4 mm, it was evaluated as acceptable ("Good"); when the average value was 4 mm or more, it was evaluated as failure ("Poor"). When the sagging was evaluated for the obtained strand, the average sagging was 3.4 mm.

(2) Evaluation for the response of discharge/suspension:

A three-dimensional model was designed using a three-dimensional CAD, wherein in the model, 25 prism shapes having a square cross section of 2 mm in each side and a height of 20 mm were each placed vertically on 5×5 square grid points which were drawn at 10 mm intervals on a horizontal plane. A molding was performed using this model under the above conditions, in order to produce a three-dimensional molded article. Dimensions of the three-dimensional molded articles were measured with a caliper, and if one or both of the two sides of the cross section of the prism is 3 mm or more, it was counted as a failed molding, and the number of failed molding was counted. The molding was repeated three times in order to calculate the average number of failed molding. If the average value was 0 or more and less than 2, it was evaluated as excellent ("Very good"); if the average value was 2 or more and less than 5, it was evaluated as acceptable ("Good"); and if the average value was 5 or more, it was evaluated as failure ("Poor"). When the response to discharge/suspension was evaluated for the obtained strand, the average value of the number of failed modeling was 3.7.

(3) Evaluation of molding stability:

A three-dimensional model was designed using a three-dimensional CAD, wherein, in the model, 25 prisms, each having 10 mm square cross-section and 100 mm height, were each placed vertically on 5×5 square grid points which were drawn at 20 mm intervals on a horizontal plane. A molding was performed using this model under the above conditions, in order to produce a three-dimensional shaped article. For the molding, strands having a weight well above 300 g (volume of 250 cm$^3$, continuous length of about 104 m) were used. If the molding was completed without abnormality, it was evaluated as acceptable ("Good"); when the discharging amount was reduced or the discharging was stopped in the middle of the molding, it was evaluated as failure ("Poor"). When the molding stability was evaluated for the obtained strand, the molding was completed without any abnormality.

The result according to Example 3-1 is shown in Table 5 below.

Comparative Example 3-1 (Comp.Ex.3-1) with regard to the third invention of the present disclosure

The production of a blended spun yarn was attempted in the same manner as in Example 3-1, except that a regenerated carbon fiber having the residual carbon content of 7.1% by weight was used. Incidentally, since single fibers were strongly bound by the residual carbon, it was difficult to measure the single fiber tensile strength and the Weibull shape parameter of the regenerated carbon fiber.

In Comparative Example 3-1, it was not possible to produce a continuous blended spun yarn, because the single fibers of the regenerated carbon fiber were bound to each other and were not sufficiently opened in the carding step, and because yarns fell off due to insufficient entanglement of the single fibers. The result is shown in Table 5 below.

**[Table 5]**

Table 5

| | Blended spun yarn | | | | | | Strand | | |
| | Regenerated carbon fiber | | | Thermoplastic Resin fiber | (*1) | Coating (sheath) resin | Evaluation for 3D molding | | |
| | Single fiber tensile strength (GPa) | Weibull shape parameter (-) | Residual Carbon (wt%) | | | | sagging | Response of discharge/suspension | molding stability |
|---|---|---|---|---|---|---|---|---|---|
| Example 3-1 | 4.7 | 7.0 | 0.6 | PA66 fiber | Good | PA6 fiber | Good | Good | Good |
| Comp.Ex. 3-1 | - | - | 7.1 | PA66 fiber | Good Poor | - | Good | - | - |

*1: Production evaluation : Labelled as "Good" when a continuous blended spun yarn was able to be produced. Otherwise, labelled as "Poor".

[Reference numbers]

| | |
|---|---|
| 11 | semiconductor material |
| 12 | plastic-containing material |
| 20 | furnace (heating furnace) |
| 21 | carrier having semiconductor material |
| 22 | plastic-containing material |
| 23 | heat source (heater) |
| 24 | gas supply part |
| 25 | exhaust port |
| 26 | internal space of furnace |
| 27 | temperature sensor |
| 100 | carbon-fiber-reinforced thermoplastic resin strand |
| 110 | core component of strand |
| 120 | sheath component of strand |
| 200 | carbon-fiber-reinforced thermoplastic resin pellet |
| 210 | core component of pellet |
| 220 | sheath component of pellet |
| L | cut length of pellet |
| R | diameter of pellet |
| C | cut treatment |
| 100b | carbon-fiber-reinforced thermoplastic resin strand of the present disclosure |
| 110b | core component |
| 120b | sheath component |

**Claims**

1. A method for decomposing a plastic-containing material, comprising:
heating the plastic-containing material to a first surface temperature in the presence of a semiconductor material in an atmosphere of a furnace into which a low oxygen concentration gas having an oxygen concentration of less than 10% by volume is introduced, in order to decompose a plastic contained in the plastic-containing material.

2. The decomposing method according to claim 1, wherein the low oxygen concentration gas is introduced into the atmosphere of the furnace while the surface temperature of the plastic-containing material is less than 300°C.

3. The decomposing method according to claim 1 or 2, wherein the first surface temperature is 300°C to 600°C.

4. The decomposing method according to any one of claims 1 to 3, wherein the low oxygen concentration gas is a mixed gas of air and a dilution gas.

5. The decomposing method according to any one of claims 1 to 4, wherein the plastic-containing material and the semiconductor material are arranged so that they are spaced apart from each other by a distance of 50 mm or less.

6. The decomposing method according to any one of claims 1 to 5, further comprising heating the plastic-containing material, which has been subjected to the heat treatment at the first surface temperature, in the presence of a semiconductor material in an atmosphere having an oxygen concentration of 10% by volume or more.

7. A method for recovering an inorganic material, wherein the plastic contained in the plastic-containing material is decomposed by the decomposing method according to any one of claims 1 to 6, in order to recover the inorganic material, wherein the plastic-containing material comprises the plastic and the inorganic material.

8. The method according to claim 7, wherein a residual carbon derived from the plastic, which is recovered together with the inorganic material, is 5% by weight or less of the inorganic material.

9. The method according to claim 7 or 8, wherein the plastic-containing material is a carbon-fiber-reinforced plastic which contains a carbon fiber as the inorganic material.

10. The method according to claim 9, wherein the recovered carbon fiber has the single fiber tensile strength of 3.0 GPa or higher, and the Weibull shape parameter of 6.0 or higher.

11. A regenerated carbon fiber having the single fiber tensile strength of 3.0 GPa or higher and the Weibull shape parameter of 6.0 or higher.

12. A blended spun yarn comprising the regenerated carbon fiber according to claim 11 and a thermoplastic resin fiber, **characterized in that**:
the regenerated carbon fiber contains a residual carbon component, and the content of the residual carbon component is more than 0% by weight and 5.0% by weight or less with respect to the regenerated carbon fiber.

13. A carbon-fiber-reinforced thermoplastic resin strand which comprises a blended spun yarn comprising the regenerated carbon fiber according to claim 11 and a thermoplastic resin fiber, **characterized in that**:
the regenerated carbon fiber contains a residual carbon component, and the content of the residual carbon component is more than 0% by weight and 5.0% by weight or less with respect to the regenerated carbon fiber.

14. A carbon-fiber-reinforced thermoplastic resin pellet which comprises the regenerated carbon fiber according to claim 11 and a thermoplastic resin, **characterized in that**:
the regenerated carbon fiber contains a residual carbon component, and the content of the residual carbon component is more than 0% by weight and 5.0% by weight or less with respect to the regenerated carbon fiber.

15. A method for producing a regenerated carbon fiber having the single fiber tensile strength of 3.0 GPa or higher and the Weibull shape parameter of 6.0 or higher, comprising:

heating a plastic-containing material to a first surface temperature in the presence of a semiconductor material in an atmosphere of a furnace into which a low oxygen concentration gas having an oxygen concentration of less than 10% by volume is introduced, in order to decompose a plastic contained in the plastic-containing material,
wherein the plastic-containing material is a carbon-fiber-reinforced plastic which contains a carbon fiber.

## FIG. 1

## FIG. 2

FIG. 3

FIG. 4

FIG. 5

FIG. 6

EP 4 209 538 A1

# FIG. 7

100b

110b    120b

**EP 4 209 538 A1**

## INTERNATIONAL SEARCH REPORT

| | International application No. |
|---|---|
| | **PCT/JP2021/032002** |

**A. CLASSIFICATION OF SUBJECT MATTER**

*C08J 11/16*(2006.01)i
FI: C08J11/16 ZAB

According to International Patent Classification (IPC) or to both national classification and IPC

**B. FIELDS SEARCHED**

Minimum documentation searched (classification system followed by classification symbols)

C08J11/00,B29B17/00

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2020-515658 A (THE BOEING CO.) 28 May 2020 (2020-05-28) claims 1, 2, 4, 6, 8, paragraphs [0028], [0035], [0049], [0050] | 1-3, 6-11, 15 |
| Y | same as above | 4, 12-14 |
| A | same as above | 5 |
| Y | JP 6-298993 A (KOBE STEEL, LTD.) 25 October 1994 (1994-10-25) claim 1, paragraphs [0019], [0022] | 4 |
| Y | JP 63-87228 A (TOKUYAMA CORPORATION) 18 April 1988 (1988-04-18) claims, p. 3, upper right column, line 11 | 12-14 |
| Y | JP 2008-240170 A (TOHO TENAX CO., LTD.) 09 October 2008 (2008-10-09) claims | 12-14 |
| Y | JP 2011-246621 A (TEIJIN LTD.) 08 December 2011 (2011-12-08) claims | 12-14 |

☑ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **08 November 2021** | **16 November 2021** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

55

## INTERNATIONAL SEARCH REPORT

| | International application No. |
|---|---|
| | **PCT/JP2021/032002** |

**C.     DOCUMENTS CONSIDERED TO BE RELEVANT**

| Category* | Citation of document, with indication, where appropriate, of the relevant passages | Relevant to claim No. |
|---|---|---|
| A | JP 2005-307007 A (SAKAI CHEMICAL INDUSTRY CO., LTD.) 04 November 2005 (2005-11-04)<br>claims | 1-10 |
| A | JP 2013-146649 A (SHINSHU UNIVERSITY) 01 August 2013 (2013-08-01)<br>claims | 1-10 |

Form PCT/ISA/210 (second sheet) (January 2015)

**INTERNATIONAL SEARCH REPORT**
Information on patent family members

International application No.

**PCT/JP2021/032002**

| Patent document cited in search report | | | Publication date (day/month/year) | Patent family member(s) | Publication date (day/month/year) |
|---|---|---|---|---|---|
| JP | 2020-515658 | A | 28 May 2020 | US 2020/0002619 A1 claims, paragraphs [0034], [0041], [0055], [0056] WO 2018/183838 A1 EP 3607026 A1 CN 106957451 A | |
| JP | 6-298993 | A | 25 October 1994 | (Family: none) | |
| JP | 63-87228 | A | 18 April 1988 | (Family: none) | |
| JP | 2008-240170 | A | 09 October 2008 | (Family: none) | |
| JP | 2011-246621 | A | 08 December 2011 | (Family: none) | |
| JP | 2005-307007 | A | 04 November 2005 | (Family: none) | |
| JP | 2013-146649 | A | 01 August 2013 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005139440 A
- JP 2012211223 A
- JP 2013146649 A
- JP 2020028850 A
- JP 2013064219 A
- WO 2018212016 A
- JP 2018109184 A
- JP 2018035492 A
- JP 2018123438 A
- JP 2020090738 A
- JP 2005531439 A
- JP 2016520459 A
- JP 2020049820 A
- JP 2019155634 A
- JP 2021055198 A
- JP 3452363 B
- JP 2020180421 A